# EUROPEAN PATENT APPLICATION

(11) **EP 4 271 085 A1**
(43) Date of publication of application: **01.11.2023**
(21) Application number: 22169822.8
(22) Date of filing: 25.04.2022
(51) Int. Cl.: H04W 72/04, H04L 47/28, H04L 65/00, H04W 72/14

(54) **VIDEO TRANSMISSION WITH PERIODIC WIRELESS RESOURCES**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment, UE, comprising the following. Processing circuitry of the UE operates a video application, according to which video frames are generated with a video frame periodicity. Each video frame is generated within a jitter window having a jitter window length. A transceiver of the UE uses radio resources for exchanging one or more video frames of the video application between the UE and a base station. The radio resources are determined by the UE based on one or more periodic-resources configurations. When the processing circuitry determines that data for a video frame, generated during one jitter window, was exchanged by use a periodic resource of one of the one or more periodic-resources configurations, the processing circuitry determines to prohibit the use of further periodic radio resources according to the one or more periodic-resources configurations for a period of time.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of 3GPP TR 38.913 e.g. version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing procedures for a UE to perform improved transmission procedures.

In an embodiment, the techniques disclosed here feature a user equipment, UE, comprising the following. Processing circuitry of the UE operates a video application, according to which video frames are generated with a video frame periodicity. Each video frame is generated within a jitter window having a jitter window length. A transceiver of the UE uses radio resources for exchanging one or more video frames of the video application between the UE and a base station. The radio resources are determined by the UE based on one or more periodic-resources configurations. When the processing circuitry determines that data for a video frame of the video application, generated during one jitter window, was exchanged by use a periodic resource of one of the one or more periodic-resources configurations, the processing circuitry determines to prohibit the use of further periodic radio resources according to the one or more periodic-resources configurations for a period of time.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6**: illustrates the relationship between Bandwidth Parts, Control Resource Sets (CORESETS), search spaces, search space sets, and PDCCH candidates,
- **Fig. 7**: illustrates an exemplary time-domain structure in a communication system, such as 5G NR, including radio frames, subframes, slots, and OFDM symbols for different subcarrier spacings,

- **Fig. 8**: illustrates the exchange of video frame data using dynamically granted uplink resources, requested based on periodic SR resources,
- **Fig. 9**: illustrates the exchange of video frame data using periodic uplink resources, of a configured grant,
- **Fig. 10**: illustrates the exchange of video frame data using periodic downlink resources, of an SPS configuration,
- **Fig. 11**: illustrates an exemplary and simplified structure of a UE and gNB,
- **Fig. 12**: illustrates a structure of the UE according to an exemplary implementation of the improved transmission procedure according to the first solution,
- **Fig. 13**: illustrates a flow diagram for the UE behavior according to an exemplary implementation of the improved transmission procedure according to the first solution,
- **Fig. 14**: illustrates a structure of the base station according to an exemplary implementation of the improved transmission procedure according to the first solution,
- **Fig. 15**: illustrates a flow diagram for the base station behavior according to an exemplary implementation of the improved transmission procedure according to the first solution,
- **Fig. 16**: is a signaling diagram illustrating an exemplary exchange between the UE and the gNB for an exemplary implementation of the improved transmission procedure according to the first solution,
- **Fig. 17**: illustrates the exchange of video frame data using periodic uplink resources of a configured grant, applying the prohibition according to an exemplary implementation of the improved transmission procedure of the first solution,
- **Fig. 18**: illustrates the exchange of video frame data using periodic uplink resources of a configured grant, applying a different variant of the prohibition according to an exemplary implementation of the improved transmission procedure of the first solution,
- **Fig. 19**: illustrates the exchange of video frame data using periodic uplink resources of a configured grant, applying a still further different variant of the prohibition according to an exemplary implementation of the improved transmission procedure of the first solution,
- **Fig. 20**: illustrates the exchange of video frame data using periodic uplink resources of three configured grants, applying the prohibition according to an exemplary implementation of the improved transmission procedure of the first solution,
- **Fig. 21**: illustrates the exchange of video frame data using dynamically granted uplink resources, requested based on periodic SR resources, applying the prohibition according to an exemplary implementation of the improved transmission procedure of the first solution,
- **Fig. 22**: illustrates the exchange of video frame data using periodic downlink resources, applying the prohibition according to an exemplary implementation of the improved transmission procedure of the first solution,
- **Fig. 23**: illustrates the exchange of video frame data using dynamically granted uplink resources, requested based on periodic SR resources, applying a different variant of the prohibition according to an exemplary implementation of the improved transmission procedure of the first solution,
- **Fig. 24**: illustrates the exchange of video frame data using periodic downlink resources, applying a different variant of the prohibition according to an exemplary implementation of the improved transmission procedure of the first solution,
- **Fig. 25**: illustrates the exchange of video frame data using periodic uplink resources, applying the prohibition for a dynamically allocated uplink transmission according to an exemplary implementation of the improved transmission procedure of the first solution,
- **Fig. 26**: illustrates the exchange of video frame data using periodic downlink resources, applying the prohibition for a dynamically allocated downlink transmission according to an exemplary implementation of the improved transmission procedure of the first solution,
- **Fig. 27**: illustrates a structure of the UE according to an exemplary implementation of the improved transmission procedure according to the second solution, and
- **Fig. 28**: illustrates a flow diagram for the UE behavior according to an exemplary implementation of the improved transmission procedure according to the second solution.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

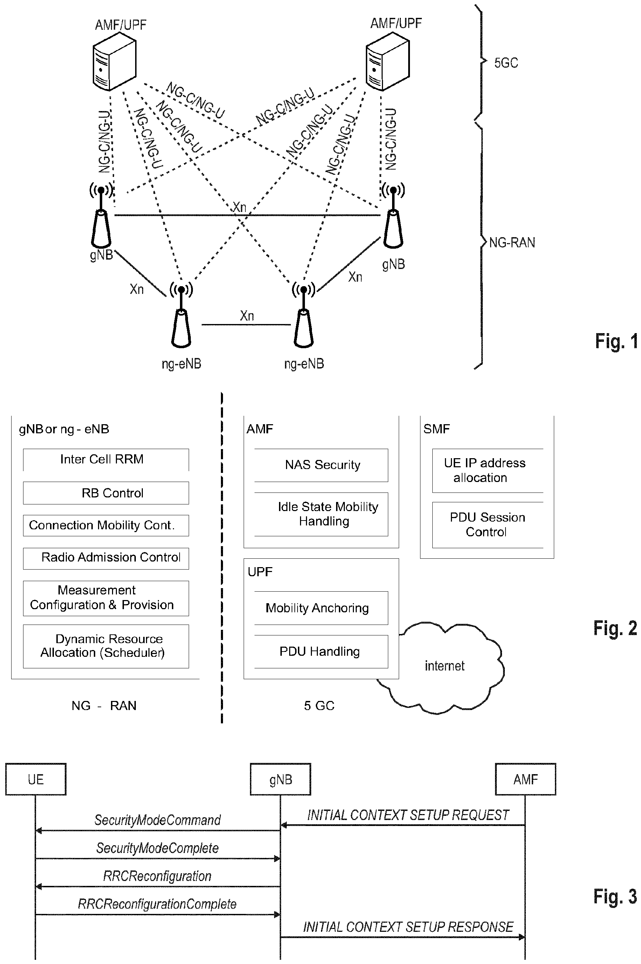

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 e.g. v16.8.0, section 4).

The user plane protocol stack for NR (see e.g. 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g. v17.1.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

Fig. 3 illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

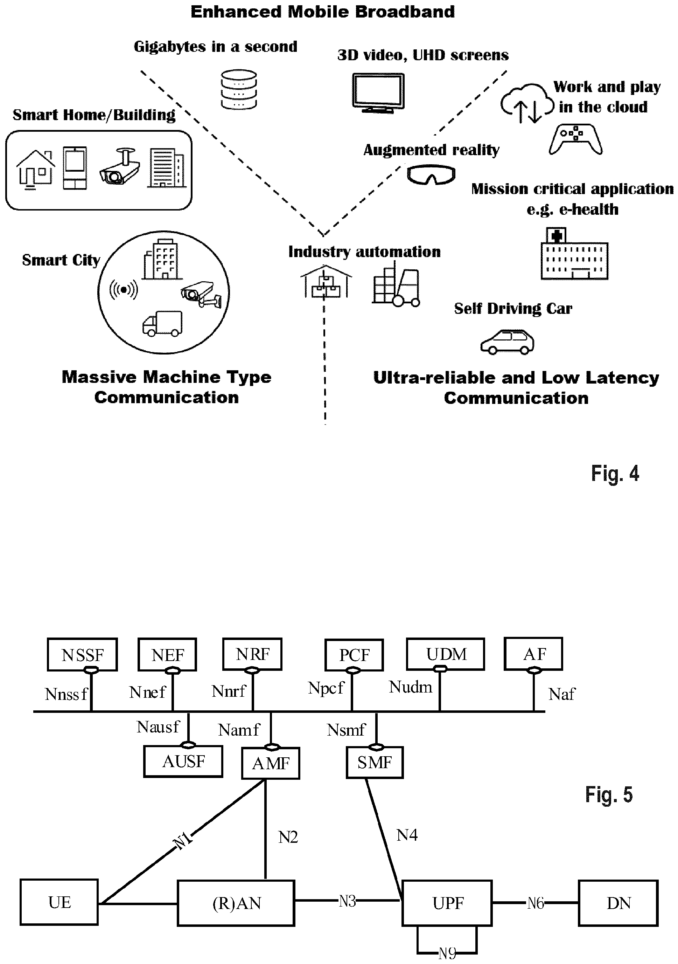

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g. 3GPP TS 23.501 e.g. v16.9.0 or v17.4.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the

Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### Bandwidth Parts - BWP

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merits in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy-efficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and by telling the UE which one of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time.

More information on the BWP operation can be found in section 5.15 of 3GPP TS 38.321 e.g. v16.6.0.

Switching between configured BWPs may be achieved in different ways. Operation of Bandwidth parts in uplink and downlink is e.g. defined in a 5G NR compliant implementation in 3GPP 38.321 e.g. v16.8.0 section 5.15. BWPs can be switched for instance by means of downlink control information (DCIs) (e.g. using a Bandwidth part indicator in DCI format 0_1 (UL grant) and DCI format 1_1 (DL schedule)), using the bwp-inactivity Timer, using RRC signaling, and by the MAC entity itself upon initiation of the Random Access Procedure. For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Some DCI formats do not contain the BWP ID (such as Formats 0_0 and 1_0), while in other DCI formats the number of bits for BWP ID is RRC-configurable and could be 0, 1, 2 bits (such as for Formats 0_1, 0_2, 1_1, and 1_2).

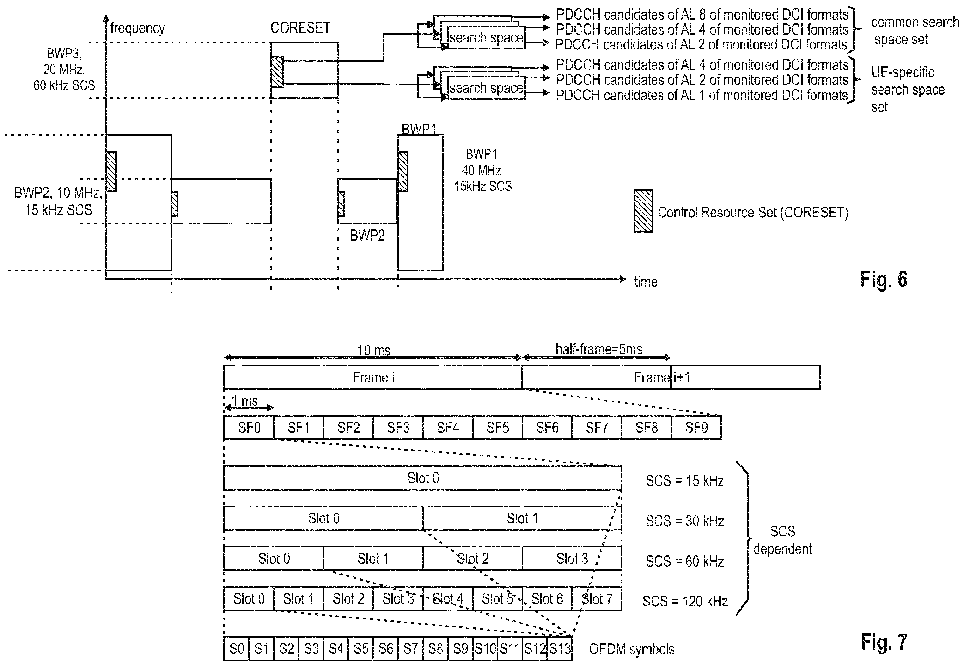

**Fig. 6** illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

The different BWPs can be e.g. configured using suitable information elements of the RRC protocol. A Carrier Bandwidth Part is a contiguous set of physical resource blocks, selected from a contiguous subset of the common resource blocks for a given numerology(u) on a given carrier.

According to one exemplary 5G NR compatible implementation in line with 3GPP 38.331 e.g. v16.8.0, different RRCReconfiguration information elements can be used.

### Control information - Search space sets

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 e.g. v17.1.0 section 7.3.1). An overview is given by the following table.

| **DCI format** | **Usage** |
|---|---|
| 0_0 | Schedulinq of PUSCH in one cell |
| 0 1 | Schedulinq of PUSCH in one cell |
| 0 2 | Schedulinq of PUSCH in one cell |
| 1_0 | Schedulinq of PDSCH in one cell |
| 1_1 | Schedulinq of PDSCH in one cell |
| 1_2 | Schedulinq of PDSCH in one cell |
| 2 0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2 4 | Cancel UL transmission |
| 2 5 | Notify availability of soft resources |
| 2 6 | Notify power saving. information |
| 3 0 | Schedulinq for Sidelink, NR PSCCH and NR PSSCH in one cell; |
| 3 1 | Schedulinq for Sidelink; LTE PSCCH and LTE PSSCH in one cell |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 e.g. version 17.1.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

As defined exemplarily by 3GPP TS 38.213, section 10.1, a UE monitors PDCCH candidates in one or more of the following CSS and USS sets:
- a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG
- a Type0A-PDCCH CSS set configured by *searchSpaceOtherSystemInformation* in *PDCCH-ConfigCommon* for a DCI format with CRC scrambled by a SI-RNTI on the primary cell of the MCG
- a Type1-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell
- a Type2-PDCCH CSS set configured by *pagingSearchSpace* in *PDCCH-ConfigCommon* for a DCI format with CRC scrambled by a P-RNTI on the primary cell of the MCG
- a Type3-PDCCH CSS set configured by *SearchSpace* in *PDCCH-Config* with *searchSpaceType = common* for DCI formats with CRC scrambled by INT-RNTI, SFI-RNTI, TPC-PUSCH-RNTI, TPC-PUCCH-RNTI, TPC-SRS-RNTI, or CI-RNTI and, only for the primary cell, C-RNTI, MCS-C-RNTI, CS-RNTI(s), or PS-RNTI and
- a USS set configured by *SearchSpace* in *PDCCH-Config* with *searchSpaceType = ue-Specific* for DCI formats with CRC scrambled by C-RNTI, MCS-C-RNTI, SP-CSI-RNTI, CS-RNTI(s), SL-RNTI, SL-CS-RNTI, or SL Semi-Persistent Scheduling V-RNTI.

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

Conceptually, **Fig. 6** provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

### Time-domain in 5G NR

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in **Fig. 7****.**

5G NR provides a plurality of slot formats, and a slot format indicates how each of the symbols within a single slot is used. It defines which symbols within a specific slot are used for uplink and which symbols are used for downlink. In LTE TDD, if a subframe (equivalent to a slot in NR) is configured for DL or UL, all of the symbols within the subframe should be used as DL or UL. But in NR, each of the symbols within a slot can be configured differently as DL or UL. Also flexible symbols exist, which can be configured as DL or UL. In the exemplary 5G NR compliant implementation, the gNB uses a slot format indicator (SFI) to inform the UE about the slot format to be used (see also TS 38.213 v16.7.0 section 11.1.1). For instance, the slot format indicator includes an index value, associated with a slot format (e.g. in the form of a table).

### Uplink Control Information in 5G NR and Scheduling Requests

Whereas Downlink Control Information is carried by the PDCCH (see above explanation), Uplink Control Information (UCI) can be transmitted on the PUCCH or the PUSCH depending on the situation. Uplink control information can be the channel state information (CSI), the ACK/NACK information and scheduling requests. Not all of these need be carried by a single PUCCH transmission. For instance, the CSI may be carried alone, or the ACK/NACK may be carried alone, or the SR may be carried alone, or the CSI and ACK/NACK are transmitted together in a PUCCH etc.

There are a plurality of different PUCCH formats that can be used for transmitting the UCI, presently there are five PUCCH formats, 0-4. Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats because they occupy from 4 to 14 OFDM symbols. The reason for having a longer time duration than the previous two formats is coverage. If a duration of one or two OFDM symbols does not provide sufficient received energy for a reliable reception, a longer time duration is necessary and one of the long PUCCH formats can be used.

Which PUCCH format is used can be e.g. determined based on how many bits of UCI should be transmitted and how many symbols (duration of the PUCCH) can be used, as exemplary illustrated in the following table (see e.g. 3GPP TS 38.211 e.g. v17.1.0, section 6.3.2).

The UCI can be transmitted on the PUCCH flexibly in the time and frequency domain using specifically assigned radio resources, e.g. PUCCH resource sets. A UE can be configured with up to four sets of PUCCH resources, wherein a PUCCH resource set is associated with a PUCCH resource set index. In particular, a PUCCH resource set contains at least four PUCCH resource configurations, where each resource configuration contains the PUCCH format to use and all the transmission parameters necessary for that format. The configuration of such resources can be done by different information elements, e.g. of the RRC protocol layer, such as the PUCCH - Config information element (see e.g. 3GPP TS 38.331 e.g. v16.7.0, such as section 6.3.2).

As mentioned, up to four PUCCH resource sets can be configured for a UE, each of them corresponding to a certain range of UCI feedback to transmit. For instance, PUCCH resource set 0 can handle UCI payloads up to two bits and hence only contains PUCCH formats 0 and 1, while the remaining PUCCH resource sets may contain any PUCCH format except format 0 and 1.

The current reporting of the UCI in the PUCCH is defined in 3GPP TS 38.213 e.g. v17.1.0, section 9.2.

A PUCCH resource may include one or more of the following parameters.
- A PUCCH resource index
- An index of the first PRB (Physical Resource Block) prior to frequency hopping and for no frequency hopping
- An index of the first PRB after frequency hopping
- An indication for intra-slot frequency hopping
- A configuration for a PUCCH format

The PUCCH resources are assigned by the gNB such that they are different for each UE. UEs use the preconfigured PUCCH resources without any coordination of the gNB. By assigning different PUCCH resources to the UE, it is ensured that UEs may use these resources at the same time without causing collisions or interference with one another.

The transmission of a scheduling request using the PUCCH is defined in 3GPP TS 38.213 e.g. v17.1.0, section 9.2.4. A UE is configured with specific parameters for determining the scheduling-request radio resources to be used for transmitting a scheduling request (SR). For instance, periodicity and offset are defined for the SR transmission and are used to determine the slot and/or the frame number for the SR transmission occasion based on the configured PUCCH resource set(s).

In said respect, the configuration of such SR resources can be done by different information elements, e.g. of the RRC protocol layer, such as the *SchedulingRequestConfig* information element and the *SchedulingRequestResourceConfig* information element (see e.g. 3GPP TS 38.331 v16.7.0, such as section 6.3.2).

In brief, the scheduling request is basically a flag raised by the user equipment to request uplink resources from the uplink scheduler at the base station. Since the device requesting the resources has no PUSCH resource available, the scheduling request is transmitted on the PUCCH using the preconfigured and periodically reoccurring PUCCH resources dedicated to the UE. The serving base station can then assign radio resources to the user equipment.

Unlike LTE, 5G NR supports configuration of multiple scheduling requests from a single device. A logical channel can be mapped to zero or more scheduling request configurations. This provides the gNB not only with information that there is data awaiting for transmission in the device, but also what type of data is awaiting for transmission. This can be useful information for the gNB to consider the various traffic types 5G NR is designed to support. For example, the gNB may want to schedule a user equipment for transmission of latency-critical information but not for non-latency-critical information.

Each device can be assigned dedicated PUCCH scheduling request resources with a periodicity ranging from every second OFDM symbol to support very latency-critical services up to every 80 ms for low overhead. Only one scheduling request can be transmitted at a given time, i.e. in the case of multiple logical channels having data to transmit, one exemplary behavior is to trigger the scheduling request corresponding to the highest-priority logical channel. It can only request in repeated and subsequent resources, up to a configurable limit, until a grant is received from gNB. It is also possible to configure a Prohibit timer, controlling how often a scheduling request can be transmitted. In the case of multiple scheduling request resources, both of these configurations are done as per scheduling request resource.

### SPS in downlink and Configured grant in uplink

In the downlink, the gNB can dynamically allocate resources to UEs via the C-RNTI on PDCCH(s) (see e.g. DCIs above). Similarly, in the uplink, the gNB can dynamically allocate resources to UEs via the C-RNTI on PDCCH(s) (see e.g. DCIs above). In addition to dynamically allocating downlink resources and uplink resources, 5G NR also provides scheduling enhancements according to which resource allocation can be implemented in 5G NR based on semi-persistent scheduling (SPS) in the downlink and based on a configured grant CG) in the uplink.

In the downlink, semi-persistent-scheduling (SPS) functionality was adopted in 5G NR as a further development of SPS as used for the previous communication system of LTE, in which it is applicable for both uplink and downlink. Furthermore, in LTE, the SPS configuration is typically dedicated to a single device. If the device does not need the allocated periodic resources (e.g. data is only transmitted for specific events, such as a collision warning), the SPS resources that are no used by the UE are wasted.

According to one 5G NR compliant example implementation, the RRC defines the relevant parameters for SPS. An RRC information element *SPS-Config* is defined in 3GPP 38.331 e.g. V16.7.0 for configuring the downlink semi-persistent transmission. For instance, the RRC defines the periodicity of the configured downlink assignments, the number of HARQ processes, MCS, etc.

Different periodicities are supported for DL SPS, e.g. common for all Subcarrier Spacings (SCS) or depending on the Subcarrier spacings. One example of the currently defined periodicities in TS 38.331, when being dependent on SCS, are presented in the following:
- For SCS of 15 KHz: {1, 2, 3..., 640} ms
- For SCS of 30 KHz: 0.5 x {1, 2, 3..., 1280} ms
- For SCS of 60 KHz: 0.25 x {1, 2, 3..., 2560} ms
- For SCS of 120 KHz: 0.125 x {1, 2, 3..., 5120} ms

The UE may be configured with several (e.g. up to 8) active configured downlink assignments for one BWP of a serving cell. When more than one is configured:
- The network decides which of these configured downlink assignments are active at a time (including all of them); and
- Each configured downlink assignment is activated separately using a DCI command, and deactivation of configured downlink assignments is done using a DCI command, which can either deactivate a single configured downlink assignment or multiple configured downlink assignments jointly.

A PDCCH addressed to the CS-RNTI can either signal and activate the configured downlink assignments, while a PDCCH addressed to CS-RNTI can indicate that the downlink assignment can be implicitly reused according to the periodicity defined by RRC, until deactivated. When required, retransmissions are e.g. explicitly scheduled on PDCCH(s).

SPS is particularly useful for periodic downlink data transmissions such as Voice over IP (VoIP) services. A base station configures the SPS radio resources, and the UE can use these periodic radio resources, without an additional scheduling request procedure.

Uplink data transmissions typically require resources being requested by the UE, followed by a packed scheduling decision and resource allocation at the scheduling side (e.g. base station). The allocation cycle causes an additional delay and signaling. The radio resource allocation delay between the UE and the base station can be avoided by allowing the UE to use radio resources without previously requesting same from the base station. This can be implemented by so-called configured grants (CG).

In addition, by using configured grants, multiple devices (UEs) may be allowed to share periodic radio resources (which facilitates reducing the waste of the periodic radio resources compared to the LTE SPS). On the other hand, there is also the possibility that the gNB defines the periodic radio resources in such a manner that they are not or nor completely shared between multiple UEs. The gNB allocates configured-grant radio resources to one or multiple UEs, which then randomly utilize these periodic radio resources when they have to transmit data (e.g. small data). With the CG, the network eliminates packet transmission delays caused by a specific scheduling request procedure that would have to be performed otherwise before being able to send data. Thereby, the utilization ratio of allocated periodic radio resources may be increased as well.

There are two types of grant free configuration schemes supported in 3GPP Release 16 and Release 17, namely Type 1 and Type 2 (see 3GPP 38.300 e.g.v16.8.0: "NR; NR and NG-RAN Overall Description; Stage 2 (Release 16)", section 10.3). According to this exemplary implementation of 3GPP TS 38.300, using the Type-1 CG, the RRC directly provides the configured uplink grant to the UE(s), e.g. including its periodicity.

With a configured grant of Type 2, the RRC defines the periodicity of the configured uplink grant while a PDCCH message addressed to the CS-RNTI of the UE(s) can either signal and activate the configured uplink grant, or deactivate it; a PDCCH addressed to the CS-RNTI indicates that the uplink grant can be implicitly reused according to the periodicity defined by RRC, until deactivated. In other words, an additional L1 signaling (e.g. the PDCCH) is introduced, where the uplink is semi-persistently scheduled by an RRC-based uplink grant that is activated/deactivated by a (de)activation DCI. RRC provides the higher layer parameters for the CG configuration.

In both cases, according to the exemplary 3GPP implementation, the RRC provides the grant configuration to the UE through a higher-layer parameter called *ConfiguredGrantConfig.* (see 3GPP TS 38.331 v16.7.0, section 6.3.2 *"Radio resource control information elements").*

A resource configuration for a CG may for instance comprise physical resources in a time domain and/or frequency domain, and/or reference signal (RS) parameters. The configuration parameter may further include a modulation and coding scheme (MCS) and/or a number of repetitions and/or a cycle period and/or a transport block size.

Retransmissions other than repetitions are explicitly allocated via PDCCH(s) or via configuration of a retransmission timer.

Different periodicities are supported for UL CG, which may depend on the Subcarrier spacings. One example of the currently defined periodicities in TS 38.331, when being dependent on SCS, are presented in the following:
- For SCS of 15 KHz: Multiple of 1 ms up to 640 ms, or multiple of 2 symbols (1/7 ms), or multiple of 7 symbols (0,5 ms)
- For SCS of 30 KHz: Multiple of 1/2 ms up to 640 ms, or multiple of 2 symbols (1/14 ms), or multiple of 7 symbols (0,25 ms)

### XR - eXtended Reality in Rel. 18

A 3GPP study item relates to eXtended Reality (XR) in RAN 1 and RAN 2. The aim is to provide efficient communications for augmented reality (AR), virtual reality (VR), mixed reality (MR) and cloud gamin. In particular, techniques are studied for XR (eXtended Reality), e.g. to accommodate XR service characteristics, such as periodicity, multiple flows, jitter, latency, reliability, etc. The considered XR applications require a high data rate in downlink (DL) and uplink (UL) with a relatively strict packet delay budget (PDB).

Furthermore, some of the XR applications run on devices with a limited source of energy, such as wearable glasses or handheld devices. Thus, energy efficiency is an important concern.

The XR applications impose a variety of data traffics, including video streams. The video frames are quite large with varying sizes. They are characterized as quasi-periodic, because video frames arrive over a time window. In addition, the periodicity of the time window is non-integer regarding radio frame/slot/symbols.
- Packet size: For a high-quality video stream, the frame size would be around 1M bits after compression for an 8K video. This leads having large size packets.
- Varying size: The frame sizes could vary due to the I-frame or P-frame/B-frame.
- Periodicities: A video stream generally generates 60/90/120 FPS, which correspond to the periodicity of 16.667, 11.111, and 8.333 ms, respectively.
- Jitter: The frame packets would arrive at the gNB/UE over a time window of [-4, 4] ms or even a larger time window.
- Delay budget: The delay budget for delivering the XR packets could be tight, for instance, 10ms for AR/VR and 15ms for cloud gaming.

### Further Improvements

In the above, the study item for XR was briefly presented. However, the current 5G NR releases cannot efficiently support the XR traffics, for example video streams. This is e.g. due to the non-integer periodicity of the video packets, the varying arrival of packets, and the large and varying packet sizes.

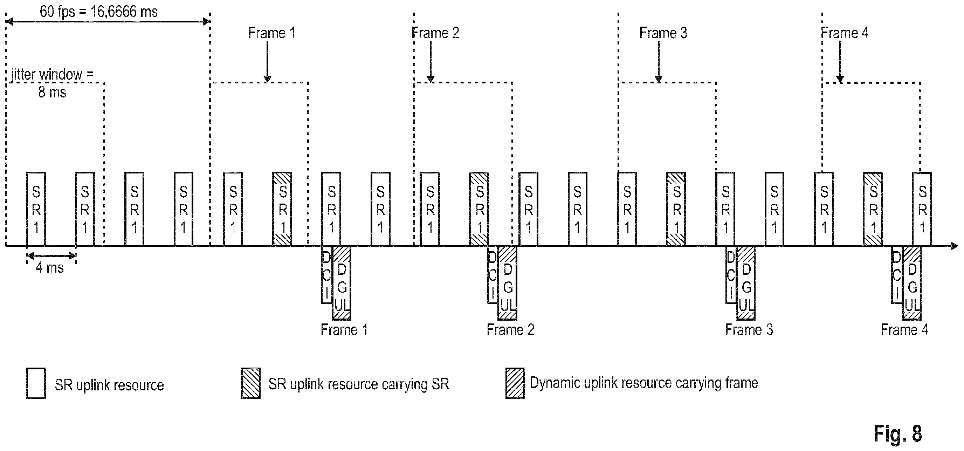

The UE might use dynamic scheduling for XR traffics. In one example for the uplink, this would first involve the transmission of a scheduling request from the UE to the base station for requesting uplink resources. The base station could then transmit a dynamic uplink grant on a suitable downlink control channel (such as the PDCCH), to the UE, to be used for the transmission of uplink XR traffic. In the downlink, the base station could transmit a downlink resource assignment on a suitable downlink control channel (such as the PDCCH), indicating the downlink resources that the base station will use for transmitting the downlink XR traffic. Therefore, using dynamic scheduling for XR traffic increases the signaling overhead and imposes that the UE must monitor PDCCH occasions frequently, resulting in high power consumption at the UE. It also increases network power consumption for DL and UL grants and corresponding PDCCH transmissions. **Fig.** 8 illustrates such a solution. In particular, Fig. 8 illustrates an exemplary scenario, according to which the UE does not have periodic CG resources available in the uplink but has to request uplink resources using a scheduling request. In said respect, the UE has a scheduling request configuration with periodic uplink resources for transmitting the scheduling request e.g. via the uplink control channel, such as the PUCCH. The SR resources exemplarily are assumed to have a periodicity of 4 ms. A video stream with 60 fps is assumed, such that a video frame is generated every 1/60=16,6666 ms. The video frames are generated at the UE side over a jitter window of 8 ms. Fig. 8 illustrates how four video frames arrive at different times within the respective jitter windows.

As apparent from Fig. 8, upon arrival of a video frame within the jitter window, the UE uses the next SR uplink opportunity to transmit a scheduling request to the base station. The base station, upon receiving the scheduling request, can dynamically grant suitable uplink resources to the UE and transmits a corresponding uplink grant (illustrated as a DCI in Fig. 8) to the UE. The UE can then use the granted uplink resources to transmit the video frame in a timely manner to the base station.

The unused periodic SR uplink resources are illustrated with empty boxes, while periodic SR uplink resources used for transmitting SRs are illustrated with striped boxes. Further striped boxes illustrate the dynamically allocated uplink resources for transmitting the video frames.

In order to avoid dynamic scheduling for XR traffic, periodically configured resources, such as SPS or CG, could be used for delivering XR data (see e.g. above description for SPS and CG and 5G NR). Such an approach however may require reserving excessive resources, which is neither resource efficient nor power efficient and would reduce the number of devices supported in the network.

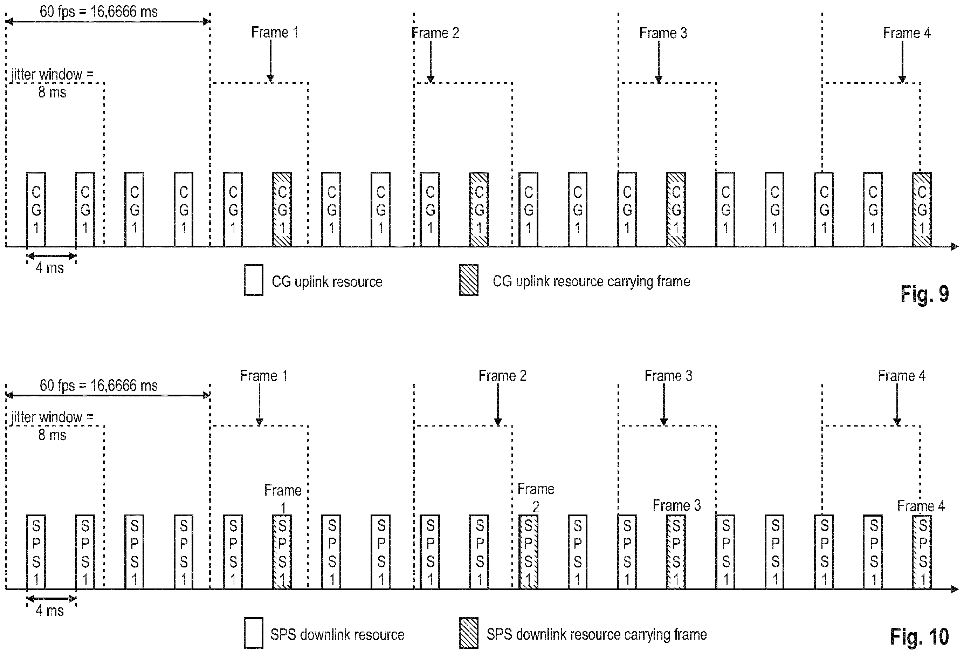

**Fig. 9** illustrates an exemplary scenario as an alternative to the SR-scenario of Fig. 8. For ease of illustration and understanding, similar assumptions are made as for Fig. 8, including a jitter window of 8 ms, a periodicity of the CG uplink resources of 4ms. Fig. 9 illustrates the over-provision of CG uplink resources for transmitting in the uplink a video stream with 60 fps. The UE at least at its application layer is aware of when the jitter window occurs. Fig. 9 illustrates how four video frames arrive at different times within the respective jitter windows and are then transmitted by an available CG uplink resource, within or outside the jitter window. The unused periodic CG uplink resources are illustrated with empty boxes, while periodic CG uplink resources used for transmitting video frames are illustrated with striped boxes.

As also apparent from Fig. 9, it is exemplary assumed that there is only one active CG configuration, here having a periodicity of 4 ms. The periodicities of the CG uplink resources (4 ms) and the video frames (16,6666 ms) do not coincide and result in a relative shift of the occurrence of the CG uplink resources with respect to the jitter window, within which the video frames are generated.

In order to avoid a long latency of the video frame transmission, sufficient opportunities are provided for the UE to transmit a video frame as early as possible. In the present example, a configured uplink grant with a periodicity of 4ms is assumed. While the over-provision of CG resources can achieve a low latency, it results in a low resource utilization.

Moreover, **Fig. 10** illustrates the over-provision of SPS downlink resources for the UE to be able to receive a video stream, in this case also at 60 fps. For ease of illustration and explanation, similar assumptions are made as done for Fig. 9, including a jitter window of 8 ms and a periodicity of the SPS downlink resources of 4ms. Fig. 10 illustrates the arrival of Frames 1-4 at the base station. From UE perspective, the UE is not necessarily aware of the locations of the jitter windows and also not when the video frames are generated at the base station. Rather, the UE periodically monitors all the periodic downlink resources according to the illustrated SPS configuration and will be able to receive the XR video Frames 1-4 illustrated in Fig. 10. As also apparent from Fig. 10, the video frames, although arriving (e.g. being generated) at the base station within the jitter window, can be transmitted by the base station outside the jitter window.

XR and video streams are however only particular exemplary scenarios for which the above disadvantages exist. There are other scenarios too. Consequently, the present invention and its solutions do not only apply to XR and video streams.

The inventors have thus identified the possibility of providing improved transmission procedures, for allowing to avoid one or more of the above described disadvantages. The present invention relates to different solutions and variants for such improved transmission procedures.

### Embodiments

In the following, UEs, base stations, and respective procedures to meet these needs will be described for the new radio access technology envisioned for the 5G mobile communication systems, but which may also be used in previous LTE mobile communication systems or future mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

The expression "**configured resources**" here shall cover one or both of "**periodic radio resources**" (also called "**periodic resources**") in the uplink and downlink. The term "**periodic radio resources**" used in the application is to be broadly understood as referring to radio resources (e.g. in the time and/or frequency domain) that occur periodically in time.

These "**configured resources**" (e.g. *"periodic radio resources")* can be allocated to a UE (or more UEs) in advance by the corresponding base station (serving the UE) and are thus already configured and usable by the UE and base station, without the need that the UE first has to request radio resources. In other words, there is no need for the base station to individually allocate these resources. Correspondingly, configured resources in the downlink can be used by the base station to transmit downlink data to the UE, and can also be called semi-persistent, SPS, resources or SPS downlink resources. One exemplary implementation of such configured downlink resources is presented above regarding SPS for 3GPP 5G. Further, configured resources in the uplink can be used by the UE to transmit uplink data to the base station, and can also be called configured grant, CG, or CG uplink grant. One exemplary implementation of such configured uplink resources is presented above regarding CG for 3GPP 5G.

The expression "**jitter window**" as used herein can be understood as referring to a property of how video frames are generated for a video application. Rather than being generated at specific periodic points in time, the video frames are generated quasi-periodically, namely over a time window that it cell is periodical. Other possible expressions could be "**time window**", "**video-frame-generation window**", "**packet arrival window**" or "**frame arrival window**" or similar expressions.

The term "**prohibit**" as used herein can be understood, e.g. as not being supposed to perform or use something, such as using resources. The term "prohibit" is used often together with a prohibition time period, or prohibition duration, meaning that the "prohibition" is limited in time, and after the end of said prohibition time period, it is again allowed to perform or use what was prohibited. Another possible terms could be to "**skip**" or "**not be allowed**", or "**discontinue**" or similar terms.

The term "**monitoring**" or "**monitor**" can be broadly understood e.g. as the process of trying to decode a possible candidate for receiving a DCI message, e.g. based on a particular format. Such a decoding attempt can also be called blind decoding.

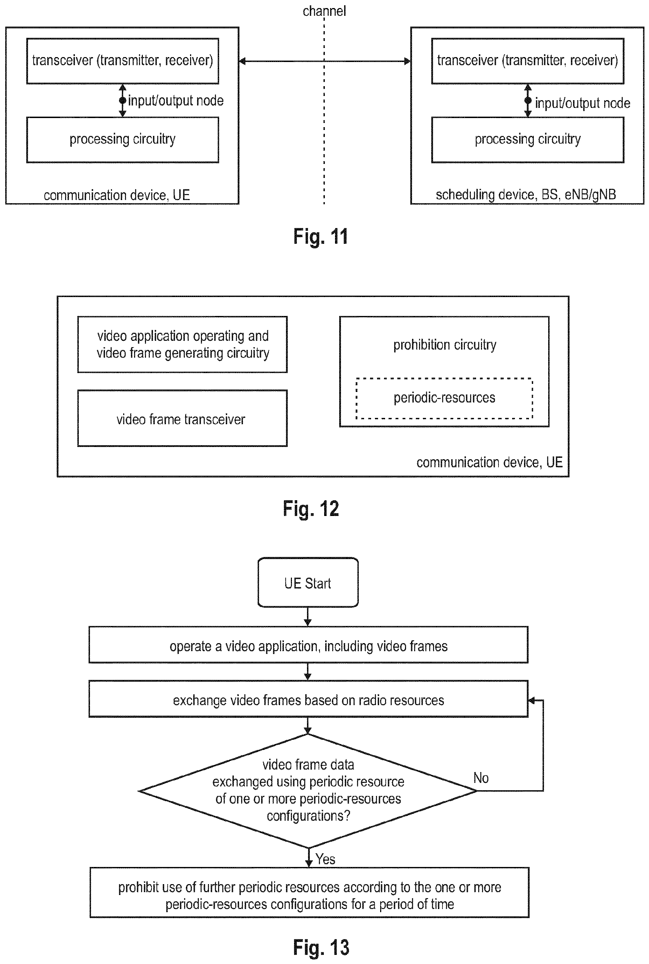

**Fig. 11** illustrates a general, simplified and exemplary block diagram of a user equipment (also termed communication device) and a scheduling device (here exemplarily assumed to be located in the base station, e.g. the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved transmission procedures will be described in the following. In said connection, improved UEs, improved base stations and improved integrated circuits are presented, which participate separately or together in the improved transmission procedures. Corresponding methods for the UE behavior and the base station behavior are provided as well. The integrated circuits correspond to the UE and base station, and respectively their behavior.

### First Solution

An improved transmission procedure is presented herein as the first solution.

**Fig. 12** illustrates a simplified and exemplary UE structure according to an exemplary implementation of the improved transmission procedure of the first solution, which can be implemented based on the general UE structure explained in connection with Fig. 11. The various structural elements of the UE illustrated in said Fig. 12 can be interconnected between one another e.g. with corresponding input/output nodes (not shown) e.g. in order to exchange control and user data and other signals. Although not shown for illustration purposes, the UE may include further structural elements.

As apparent from Fig. 12, the UE may include a video application operating circuitry and video frame generating circuitry, a video frame transceiver for transmitting and receiving video frames, and a prohibition circuitry with access to periodic resources.

In the present case as will become apparent from the below disclosure, the receiver of the UE can thus be exemplarily configured to at least partly perform one or more of receiving video frames, receiving information about a jitter window operated at the base station, etc.

In the present case as will become apparent from the below disclosure, the processing circuitry of the UE can thus be exemplarily configured to at least partly perform one or more of operating a video application, generating video frames, determining when to prohibit use of further periodic resources, prohibiting the use of further periodic resources, etc.

In the present case as will become apparent from the below disclosure, the transmitter of the UE can thus be exemplarily configured to at least partly perform one or more of transmitting video frames, transmitting information on a timing of a jitter window operated at the UE, etc.

One exemplary procedure as will be disclosed in more detail further below is implemented by a UE that includes the following. Processing circuitry of the UE operates a video application, according to which video frames are generated with a video frame periodicity. Each video frame is generated within a jitter window having a jitter window length. A transceiver of the UE uses radio resources for exchanging one or more video frames of the video application between the UE and a base station. Radio resources are determined by the UE based on one or more periodic-resources configurations. When the processing circuitry determines that data for a video frame of the video application, generated during one jitter window, was exchanged by use a periodic resource of one of the one or more periodic-resources configurations, the processing circuitry determines to prohibit the use of further periodic radio resources according to the one or more periodic-resources configurations for a period of time.

A corresponding exemplary method comprises the following steps performed by a UE:
- operating a video application, according to which video frames are generated with a video frame periodicity, wherein each video frame is generated within a jitter window having a jitter window length,
- using radio resources for exchanging one or more video frames of the video application between the UE and a base station, the radio resources being determined by the UE based on one or more periodic-resources configurations,
- when determining that data for a video frame of the video application, generated during one jitter window, was exchanged by use a periodic resource of one of the one or more periodic-resources configurations, determining to prohibit the use of further periodic radio resources according to the one or more periodic-resources configurations for a period of time.

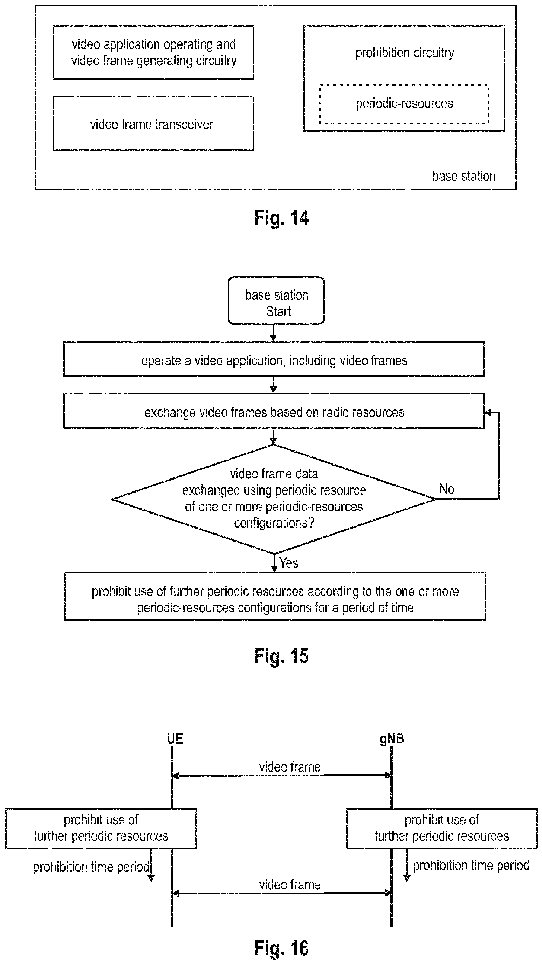

A corresponding sequence diagram for an exemplary UE behaviour in line with the above-discussed UE and UE method is illustrated in Fig. 13. As apparent therefrom, the UE operates the video application, wherein the video application operates based on video frames. Further, the UE exchanges video frames based on radio resources, which may include transmitting video frames to the base station and include receiving video frames from the base station. The UE then determines whether the data for the video frame (be it received or transmitted) was exchanged by use of a periodic resource. If so (Yes, in Fig. 15), the UE proceeds to prohibit the use of further periodic radio resources according to the one of more periodic-resource configurations for a period of time.

Although not illustrated in Fig. 13, the prohibition ends after the end of the prohibition time period, and the UE is again allowed to use the (previously-prohibited) periodic resources according to the one or more periodic-resource configurations.

The above-described improved transmission procedure thus achieves the object and overcomes some of the drawback explained above. For instance, the resource utilization is increased because periodic resources that would be unused are prohibited and thus it is clear at both sides (i.e. UE and BS side) that these prohibited radio resources will not be used by the communication partner. With respect to a prohibited downlink resource, the UE is able to save power, because it does not need to monitor the prohibited periodic resources in the downlink knowing that the base station is prohibited (i.e. not allowed) to transmit a video frame in them. Furthermore, there is no possibility that the UE mis-decodes information detected at those periodic downlink resources. Moreover, in one example the UE does not need to transmit a negative acknowledgment (NACK) for the unused periodic downlink resource to the base station as feedback.

With respect to a prohibited uplink resource of a configured grant, the base station can also save power, because the base station does not need to monitor the prohibited periodic CG resources in the uplink knowing that the UE is prohibited (i.e. not allowed) to transmit a video frame in them. Furthermore, there is no possibility that the base station mis-decodes information detected at those periodic uplink resources. Moreover, in one example the base station does not need to transmit a negative acknowledgement (NACK) for the unused periodic uplink resource to the base station as feedback.

With respect to a prohibited uplink resource for a scheduling request, the base station can save power, because the base station does not need to monitor the prohibited SR uplink resource knowing that the UE is prohibited (i.e. not allowed) to transmit a scheduling request in them. Furthermore, there is no possibility that the base station mis-decodes information detected at those periodic SR uplink resources as an actual SR and grants uplink/downlink resources to the UE.

Some exemplary implementations of the improved transmission procedure also involve the base station, to which the UE is currently connected (termed e.g. serving base station because the base station serves the UE). Correspondingly, the improved transmission procedure also provides an improved base station that participates therein.

**Fig. 14** illustrates a simplified and exemplary base station structure according to an exemplary implementation of the improved transmission procedure, which can be implemented based on the general base station structure explained in connection with Fig. 11. The various structural elements of the base station illustrated in said Fig. 14 can be interconnected between one another e.g. with corresponding input/output nodes (not shown) e.g. in order to exchange control and user data and other signals. Although not shown for illustration purposes, the base station may include further structural elements.

As apparent therefrom, the base station comprises a video application operating circuitry and video frame generating circuitry, a video frame transceiver for transmitting and receiving video frames, and a prohibition circuitry with access to periodic resources.

In the present case as will become apparent from the below disclosure, the receiver of the base station can thus be exemplarily configured to at least partly perform one or more of receiving, from the UE, video frames and information on a timing of a jitter window operated at the UE, etc.

In the present case as will become apparent from the below disclosure, the processing circuitry of the base station can thus be exemplarily configured to at least partly perform one or more of operating a video application, generating video frames, determining when to prohibit the use of further periodic resources, prohibiting the use of further periodic resources etc.

In the present case as will become apparent from the below disclosure, the transmitter of the base station can thus be exemplarily configured to at least partly perform one or more of transmitting video frames and information on a jitter window operated at the base station, etc.

One exemplary procedure as will be disclosed in more detail further below is implemented by a base station that includes the following. A processing circuitry operates a video application, according to which video frames are generated with a video frame periodicity. Each video frame is generated within a jitter window having a jitter window length. A transceiver uses radio resources for exchanging one or more video frames of the video application between a UE and the base station. The radio resources are determined by the base station based on one or more periodic-resources configurations. When the processing circuitry determines that data for a video frame of the video application, generated during one jitter window, was exchanged by use a periodic resource of one of the one or more periodic-resources configurations, the processing circuitry determines to prohibit the use of further periodic radio resources according to the one or more periodic-resources configurations for a period of time.

A corresponding method comprises the following steps performed by the base station:
- operating a video application, according to which video frames are generated with a video frame periodicity, wherein each video frame is generated within a jitter window having a jitter window length,
- using radio resources for exchanging one or more video frames of the video application between a UE and the base station, the radio resources being determined by the base station based on one or more periodic-resources configurations,
- when determining that data for a video frame of the video application, generated during one jitter window, was exchanged by use a periodic resource of one of the one or more periodic-resources configurations, determining to prohibit the use of further periodic radio resources according to the one or more periodic-resources configurations for a period of time.

A corresponding sequence diagram for an exemplary base station behavior in line with the above-discussed base station and corresponding method is illustrated in Fig. 15. The sequence diagram illustrates an exemplary and simplified implementation of the above presented base station method.

**Fig. 16** illustrates a simplified and exemplary interaction between the improved UE and improved base station of the above discussed improved transmission procedure of the first solution. Fig. 16 illustrates the sequential exchange of two video frames (be it in the downlink or the uplink). In between, it further illustrates how both sides (UE and BS; here in Fig. 16 illustrated as e.g. gNB) prohibit use of further periodic resources for a prohibition time period. Subsequently, i.e. after the prohibition time period ends, the next video frame can be exchanged between the UE and base station using periodic resources.

Therefore, the above-described advantages at the UE and BS side can be achieved.

In the following, more specific implementations and variants of the above discussed operations of the first solution will be described. The description will be presented mainly from the UE side, but applies corresponding to the base station side as well.

In the following, the solutions and their variants and implementations are described on the basis of a video stream exchanging video frames between the UE and base station. In one example the video application is an application for eXtended Reality (XR), as presented above for 5G NR.

However, this is only an example of a scenario to which the solutions can be applied. The solutions can also be applied to other scenarios than video, namely in scenarios in which data is exchanged with a certain periodicity, e.g. over a generating window (such as the jitter window for video frames). Other scenarios are for example the exchange of quasi-periodic data, including data from a monitoring or sensing application, such as smart-metering, environmental monitoring or agricultural monitoring.

In the following, however, it is exemplarily assumed for ease of explanation that the UE and base station operate a video application, which involves the exchange of video frames in the downlink and/or uplink. The video frames are generated with a certain video frame periodicity that depends on the video application, e.g. based on the frame-per-second (fps) of the video stream, such as 60 fps, 90 fps, 120 fps or another suitable number.

Moreover, it is also assumed that while the video frames as such are periodical (see above fps), the generation of the video frames is quasi-periodical and occurs at a point in time during a time window, here called exemplarily "jitter window".

According to the solution, periodic resources are available for the exchange of the video frames, wherein these periodic resources are configured using one or more periodic-resources configurations. Each periodic-resources configuration configures a set of periodic resources that are usable for the exchange of the video frames.

The present solution relates to three different types of periodic resources, including semi-persistent-scheduling, SPS, resources in the downlink, configured-grant resources in the uplink and scheduling-request, SR, resources in the uplink. In the following, the solutions are described in connection with all three types of periodic resources. The UE and base station can implement and support the solution for all three types. However, this is not necessary. Rather, the solutions can also apply to only one of the three types, or to a combination of two or three types. The resulting UE and base station behavior thus would support only one of the three types, or a combination of two or three types.

Correspondingly, an SPS downlink resource configuration configures a set of periodic downlink resources usable by the base station to transmit downlink data to the UE without sending individual downlink scheduling information through a DCI from the base station. A configured uplink resource grant configures a set of periodic uplink resources usable by the UE to transmit uplink data to the base station without a prior scheduling request from the UE to the base station and also without sending individual scheduling information through a DCI from the base station. A scheduling-request uplink resource configuration configures a set of periodic uplink resources usable by the UE to transmit a scheduling request to the base station without a prior scheduling request from the UE to the base station and also without sending individual scheduling information through a DCI from the base station.

The base station can be responsible for configuring the periodic resources that are to be used for exchanging the video frames, and provides corresponding information on the one or more periodic-resources configurations to the UE.

In an example, only one set of periodic resources is configured, usable to transmit the video frames. In another example, two or more sets of periodic resources are configured, respectively usable for transmitting the video frames. Using two or more sets of periodic resources increases the flexibility of how the periodic resources can be configured. Furthermore, it may further increase the resource utilization because the different periodic resource sets can be configured so as to be available close to the jitter window.

According to the solutions, the use of some periodic radio resources is prohibited so as to save power and release the prohibited periodic radio resources. In particular, the data of a video frame is exchanged using a periodic resource from one of the configured periodic-resources configuration. Once the data of the video frame is exchanged, no further video frame data needs to be exchanged until the generation of the next video frame, within the next jitter window. Therefore, only one or more periodic resources being available after the next video frame are required, and those periodic resources directly subsequent to the transmission of the previous video frame are no longer needed and their use can be prohibited, thereby achieving a clear and deterministic behavior at the UE and the base station regarding these unused periodic resources.

The following implementation of the solution is applied to the transmission of video frames in the uplink using periodic uplink radio resources of a configured grant. Correspondingly, the one or more periodic-resource configurations generally mentioned above correspond to one or more configured uplink resource grants. The UE generates the video frames of the video application and then determines a suitable periodic uplink resource provided by one of the available CGs for transmitting the data of the generated video frame to the base station. The UE then indeed transmits the data of the generated video frame to the base station using the determined periodic uplink resource of the one configured uplink resource grant. As a result thereof, e.g. when the UE determines that the data of the generated video frame of the video application was successfully transmitted to the base station using this periodic uplink resource, the UE also determines to prohibit use of further periodic uplink resources according to any one of the available configured uplink resource grants for the prohibition time period.

The following implementation of the solution is applied to the transmission of video frames in the downlink using periodic downlink radio resources of an SPS downlink configuration. In particular, the one or more periodic-resource configurations generally mentioned above correspond to one or more semi-persistent scheduling, SPS, downlink resource configurations. The UE monitors the periodic downlink resources provided by the SPS configuration for receiving video frames of the video application from the base station. At some point, the UE will receive data of the video frame from the base station using a periodic downlink resource provided by one of the available SPS downlink resource configurations. As a result thereof, e.g. when the UE determines that the data of the video frame was successfully received from the base station in said periodic downlink resource, the UE also determines to prohibit use of further periodic downlink resources according to any one of the one or more SPS downlink resource configurations for the prohibition time period. Correspondingly, the UE needs not to monitor the further periodic downlink resources for possible downlink data of video frames from the base station during said prohibition time period.

In one exemplary variant thereof, the UE also does not need to transmit, to the base station, uplink control information regarding reception feedback for potential downlink data received according to the further periodic downlink resources, considering that downlink transmission of data is not allowed. From base station perspective, the base station needs not to monitor uplink resources for the corresponding uplink control information regarding reception feedback.

The following implementation of the solution is applied to the transmission of video frames in the uplink using radio resources that have been dynamically allocated by the base station, in response to a scheduling request from the UE. In particular, the one or more periodic-resource configurations generally mentioned above here correspond to one or more, scheduling request, SR, uplink resource configurations. The UE is configured with periodic scheduling request, SR, uplink resources for transmitting a scheduling request to the base station according to the one or more SR uplink resource configurations. The UE generates the video frame of the video application, and in the absence of suitable (periodic or dynamically allocated) uplink resources for transmitting the data of the generated video frame, the UE requests uplink resources from the base station. To said end, the UE first determines a periodic SR uplink resource according to one of the one or more SR uplink resource configurations and then transmits a scheduling request to the base station using the determined periodic SR uplink resource according to the one SR uplink resource configuration. After receiving the dynamic grant of uplink resources, the UE can transmit the data of the generated video frame to the base station using those uplink resources dynamically granted by the base station. As a result, e.g. when the UE determines that the data of the video frame was successfully transmitted to the base station in said dynamically-allocated uplink resource, the UE also determines to prohibit the use of further periodic SR resources according to the one or more SR uplink resource configurations for the prohibition time period.

The prohibition time length may begin with the received message allocating the UL resources (e.g. DCI) or with the actual transmission of the remaining video frame data.

The solutions so far have been explained in that the prohibition of the use of the periodic radio resources is performed for a period of time. The following exemplary implementations provide more details on said prohibition time period.

In more detail ,the prohibition time period is such that it ends before radio resources according to the one or more periodic-resources configurations are to be used for exchanging data of a subsequent video frame of the video application, the subsequent video frame being directly subsequent to that video frame that triggered the prohibition. In other words, the prohibition time should not be so long as to not allow the timely transmission of the next video frame.

Different examples are presented in the following. Exemplary implementations of these examples will be first explained in connection with configured grant uplink resources i.e. with a scenario where the UE transmits video frames in the uplink to the base station. However, the different examples and their underlying concepts apply equally to implementations in connection with periodic SR uplink resources and periodic SPS downlink resources.

According to a first example, the prohibition time period ends at the end of a configured prohibition time period that starts with reference to the periodic resource used for exchanging the data of the video frame. Accordingly, it is assumed that a prohibition time period of a particular length is defined in advance, e.g. as configured by the base station. Then, said prohibition time period of a particular length can start after the transmission of the video frame data using the periodic resource and spans the particular length. Depending on the length of the prohibition time period and which periodic resource is used for transmitting the video frame data, the prohibition duration may cover a different number of periodic resources and may or may not overlap the next jitter window.

Correspondingly, the UE has a suitable association between each of the different CGs (and their periodic resources) with a prohibition time length. As mentioned above, in one example, the base station may be responsible for determining the association and its content and for providing the association to the UE, e.g. using the RRC protocol.

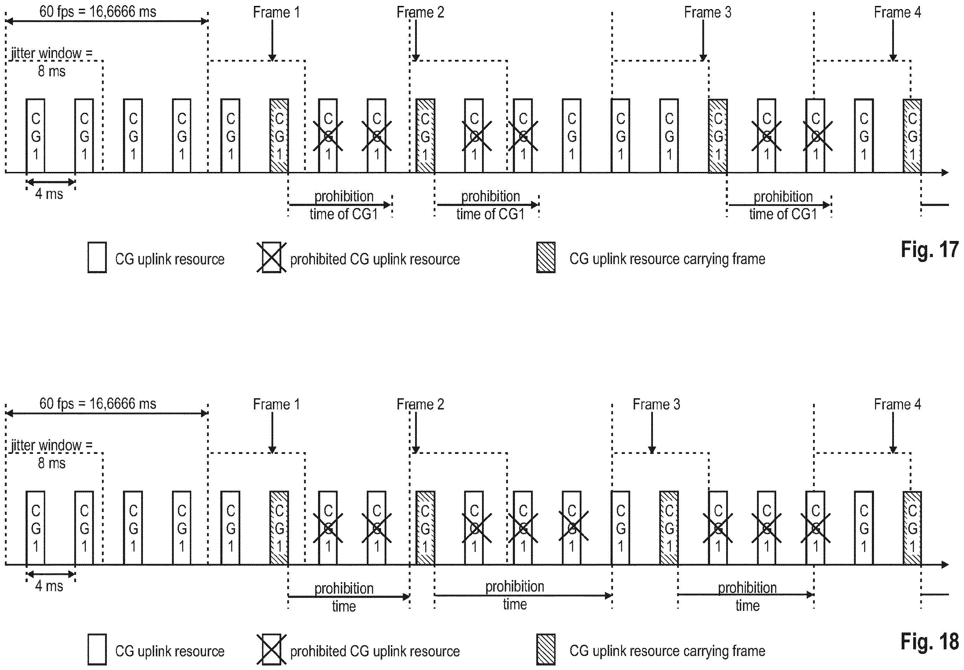

An exemplarily implementation for the CG uplink resource scenario is illustrated in Fig. 17. As apparent from this figure, similar assumptions have been made as in connection with Fig. 9. For instance, it is assumed that the UE is configured with one set of periodic CG uplink resources of a configured grant, CG1, with a periodicity of 4 ms. The video frames relate to a video stream having 60 fps and are generated within a jitter window with a length of 8 ms. It is furthermore exemplarily assumed that the prohibition time length, for use with the configured grant, CG1, is configured to be half of the length of the video periodicity, i.e. 8,3333 ms. Video Frame 1 is generated within the jitter window, and the next suitable CG1 periodic resource is used by the UE to transmit the video frame data to the base station. The prohibition time starts at the end of the CG1 periodic resource used for transmitting the data of video Frame 1, and thus covers the occurrence of the next two CG1 periodic resources. These prohibited CG uplink resources are crossed out in the illustration of Fig. 17. From the base station perspective, the base station receives the data of video Frame 1 in the CG1 resource, and being aware of the prohibit time length and behavior of the UE, knows that the subsequent two CG1 resources are prohibited and will not be used by the UE to transmit data in the uplink. Correspondingly, the base station can stop monitoring the two prohibited CG1 uplink resources.

The above UE and BS behaviour is correspondingly applied and performed for transmitting the data of video Frames 2, 3 and 4 from the UE to the base station. As apparent from Fig. 17, the prohibition time thus may end well before the beginning of the next jitter window (e.g. for video frames 1, 2), or may even partly overlap with the next jitter window (e.g. for video frame 3), depending on the occurrence of the periodic resource with which the video frame data is transmitted to the base station.

In one exemplary implementation, the association between different SR /CG /SPS configurations and the respective prohibition time values can be commonly defined for being used for SR, SPS and CG. Or, separate associations between different SR / CG / SPS configurations and the respective prohibition time values can be defined for being used for SR, SPS and CG, thus increasing the flexibility of the configuration.

According to a second example of how the prohibition time period can be implemented, knowledge of the timing of the jitter window is used. In particular, rather than using a fixed and thus constant prohibition time period, the prohibition time period dynamically extends to the beginning of the next jitter window. The second example is shown in Fig. 18, which is illustrated based on the same assumptions as in Fig. 17 above. As before, video Frame 1 is generated within the jitter window, and the next suitable CG1 periodic resource is used by the UE to transmit the video frame data to the base station. The prohibition time starts at the end of the CG1 periodic resource used for transmitting the data of video Frame 1 and ends at the beginning of the next jitter window (within which the next video Frame 2 will be generated). In this particular case, the prohibition time thus cover the occurrence of the next two CG1 periodic resources, which are crossed out in Fig. 18. From the base station perspective, the base station receives the data of video Frame 1 in the CG1 resource. The base station knows that the prohibition time extends until the beginning of the next jitter window and thus can stop monitoring the two prohibited CG1 uplink resources.

The above UE and BS behaviour is correspondingly applied and performed for transmitting the data of video Frames 2, 3 and 4 from the UE to the base station. As apparent from Fig. 18, the length of the prohibition time varies depending on the occurrence of the periodic resource with which the video frame data is transmitted to the base station. Consequently, the prohibition time period can thus cover a different number of CG periodic resources (e.g. three CG periodic resources for the prohibition time period in connection with video Frame 2).

A third example of how the prohibition time period can be implemented is quite similar to the second example in that knowledge of the timing of the jitter window is used. However, rather than defining the beginning of the next jitter window as the end of the prohibition time period (as in the second example), the third example defines the beginning of a first-occurring periodic resource that overlaps the next jitter window as the end of the prohibition time period. Alternatively, rather than the first-occurring periodic resource, also the second-occurring periodic resource, or third-occurring periodic resource, ...penultimate-occurring periodic resource, or the last-occurring periodic resource within the next jitter window can be defined as the end of the prohibition time period. This achieves that a large number of CG periodic resources are prohibited, while facilitating to maintain a low latency delay, because at least one periodic resource that is located within the jitter window is usable for transmitting the video frame data.

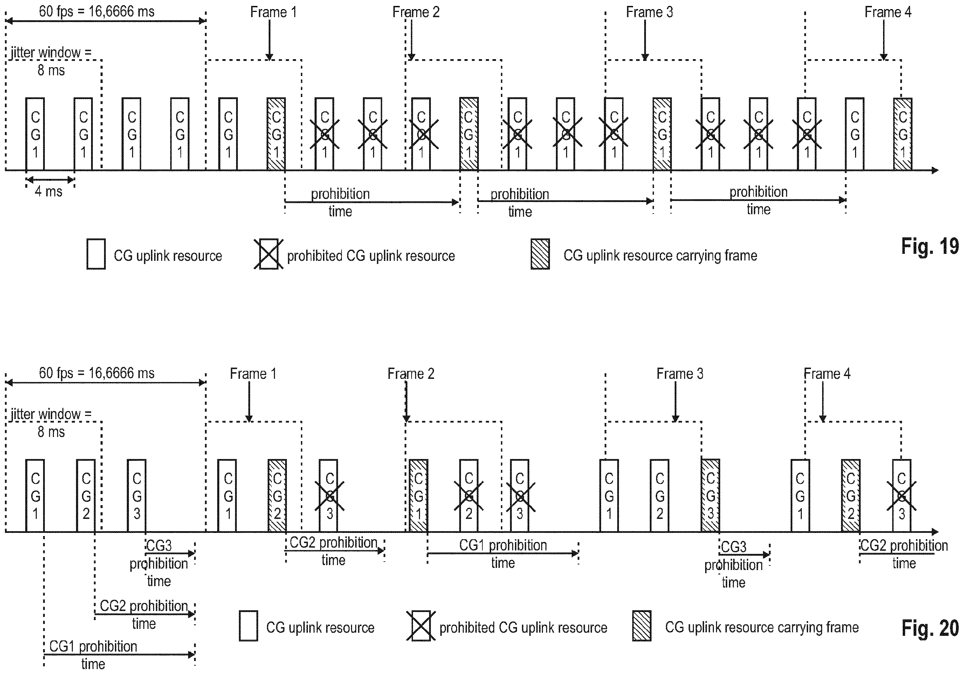

This third example is shown in **Fig. 19**, which is illustrated based on the same assumptions as in Fig. 17 and Fig. 18 above. As before, video Frame 1 is generated within the jitter window, and the next suitable CG1 periodic resource is used by the UE to transmit the video frame data to the base station. The prohibition time starts at the end of the CG1 periodic resource used for transmitting the data of video Frame 1 and ends at the beginning of the second-in-time CG1 periodic resource within the next jitter window (within which the next video Frame 2 will be generated). In this particular case, the prohibition time thus covers the occurrence of the next three CG1 periodic resources, which are crossed out in Fig. 19. The last prohibited CG1 periodic resource is fully within the next jitter window. In this particular example, data for video Frame 2 would be generated in time to be transmittable in the first prohibited CG1 periodic resource, but has to be instead transmitted using the second CG1 resource of said jitter window, incurring a slight delay. On the other hand, while in some instances, a small delay is incurred, more periodic resources can be prohibited, thereby increasing the possibilities to save power at the UE and BS side.

The above second and third examples are based on the knowledge of the timing of the jitter window. The following variants and implementations deal with how the UE and base station can acquire the necessary knowledge about the timing of the jitter window. With respect to the jitter window at the UE side, the UE operates the video application and thus has the necessary knowledge on the timing of the jitter window, at least on the application layer operating the video application. In one example, information on the timing of the jitter window can be provided by this UE application layer to the UE layer responsible for handling the prohibition; this can be done by suitable inter-layer communication at the UE.

As an alternative to said inter-layer communication, the layer of the UE handling the prohibition can estimate the timing of the jitter window. For instance, for the estimation the UE layer can use the time at which the video frames arrive from the UE application layer. Further, as an improved example, an initial estimation of the jitter window timing can also be updated by the UE layer, taking into account further video frame arrivals. In addition, the UE layer can take further information into account - if available, such as one or more of the video frame periodicity, the jitter window length, etc.

The above mentioned knowledge of the jitter window timing operated at the UE may also be available at the base station side, e.g. obtained while establishing the video application between the UE and the base station. In case, the jitter window timing operated at the UE is not informed to the base station during application establishment, the base station can also be informed separately by the UE on the jitter window timing. In a still further alternative, the base station can try to estimate the jitter timing window, based on the available information such as the reception of the video frames.

A further implementation of the above first example of how the prohibition time period can be implemented is presented in the following in connection with Fig. 20. In this particular implementation, it is exemplarily assumed that - instead of the UE being configured with only one set of periodic CG uplink resources of a configured grant, CG1 - the UE is configured with three separate sets of periodic uplink resources, corresponding to configured grants CG1, CG2, and CG3 for the transmission of video frame data. In this exemplary scenario of Fig. 20 it is additionally assumed that the three periodic CG resources respectively have the same periodicity of 16 ms (i.e. almost the same periodicity as the video frame periodicity of 16,6666 ms).

Moreover, different prohibition time lengths are configured for the different configured grants. In this example, the different prohibition time lengths relate to the different timings of the periodic resource(s) of the CGs with respect to the jitter window. For instance, the prohibition time length associated with CG1 is comparatively long, because the periodic resource of CG1 is located at the beginning of the jitter window. Correspondingly, the prohibition time length associated with CG3 is comparatively short, because the periodic resource of CG3 is located at the end of the jitter window. Finally, the prohibition time length associated with CG2 is configured as being between those for CG1 and CG3. In Fig. 20, it is exemplarily assumed that the three prohibition time values end at the same time, here shortly before the beginning of the next jitter window. However, this is merely an example, and the different prohibition time lengths can be configured to end at respectively different points in time.

As apparent from Fig. 20, video Frame 1 is generated within the jitter window, and the next suitable periodic CG resource is used by the UE to transmit the video frame data to the base station. In this particular case it is the periodic resource provided by CG2. Correspondingly, the prohibition time is the one associated with CG2 and thus starts at the end of the CG2 periodic resource used for transmitting the data of video Frame 1, and thus covers the occurrence of the next CG3 periodic resource. The prohibited CG uplink resource of CG3 is crossed out in the illustration of Fig. 20. From the base station perspective, the base station receives the data of video Frame 1 in the CG2 resource, and being aware of the prohibit time length associated with CG2, the base station knows that the subsequent CG3 resource is prohibited and will not be used by the UE to transmit the data in the uplink. Correspondingly, the base station can stop monitoring the prohibited CG3 uplink resource.

The above UE and BS behaviour is correspondingly applied and performed for transmitting the data of video Frames 2, 3 and 4 from the UE to the base station. As apparent from Fig. 20, the data for video Frame 2 is generated in time to be transmittable by the periodic resource provided by CG1. Therefore, the prohibition time length to be applied is the one associated with CG1, which thus covers the occurrences of the next two periodic resources, here of CG2 and CG3.

The data for video Frame 3 is generated towards the end of the jitter window, such that the next available periodic resource is provided by CG3, outside the jitter window. Therefore, the prohibition time length to be applied is the one associated with CG3, which in this case however covers no further periodic CG resource.

The above-described examples were based on scenarios, according to which in some instances, the periodicity of the video frames (e.g. 16,6666ms for 60 fps) cannot be aligned with the periodicity configurable for the periodic resources (e.g. multiple of 1ms). As a result, there is a relative drift over time of the occurrences of the periodic resources and the timing of the jitter window. This could result in that the pre-configured prohibition time values for the first example (see e.g. Fig. 17 and 20) are not optimal any more during the video stream.

For instance, at the beginning of the example of Fig. 20, a long prohibition time for CG1 might be suitable to cover a large part of the remaining video frame periodicity. However, with the passing of time, the CG1 periodic resources will no longer be at the beginning of the jitter window, but rather outside or at the end of the jitter window (compare position of CG1 in Fig. 20, at the time of the Frame 4 generation). This might result in less power saving than possible and in less resource efficiency, because the respective prohibition time lengths are not aligned anymore with the next jitter window. In one example, the comparatively long prohibition time associated with CG1, might cause a long delay for transmitting the video frame data.

Correspondingly, further advantageous implementations are provided to overcome this issue.

According to one exemplary implementation, it is foreseen that the prohibition time values associated with the different periodic resources are re-configured (e.g. regularly) so as to compensate the relative drift over time and thus to be again better aligned. The base station can re-determine the prohibition time lengths for the different CGs. For example, the base station can take into account an updated timing of the periodic resources of CG1 and the intended end of the prohibition time period with respect to the next jitter window, so as to determine the adequate length of the prohibition time length. The updated prohibited time lengths for CG2 and C3 can be re-determined by the base station in the same or similar manner as explained for CG1.

Furthermore, the base station can also determine when the prohibition time lengths should be updated, and then transmit a corresponding configuration message to the UE.

Rather than performing the re-determining of the different prohibition time lengths at only the base station, as just explained, another exemplary implementation provides that the UE and base station re-determine the prohibition time lengths on their own and in a synchronized manner. Both the UE and the base station have the necessary information in said respect. For instance, the UE and base station know the video frame periodicity and the respective periodicities of the periodic resources and thus can determine the amount of drift that occurs for each frame periodicity, i.e. in the exemplary scenario of Fig. 20, 0,6666ms. The prohibition time lengths can be corrected in time based on said drift amount. The initial configuration of the prohibition time values is taken as a reference by the UE and base station and can then be updated in suitable intervals, such as for every x video frame periodicity (x being a positive integer). Based on this implementation, the base station does not need to transmit updated configuration information on the updated prohibition time values.

For the implementations of the solution that use the knowledge of the timing of the jitter window, the relative drift over time of the occurrences of the periodic resources and the timing of the jitter window is less problematic, because the prohibition time period extends dynamically with reference to the jitter window (or two respectively a periodic resource within the jitter window).

Moreover, in the future, it might be possible to configure the periodicity of the periodic resources to be exactly the same as the periodicity of the video frames, in which case the above underlying problem will not occur. The occurrences of the periodic resource and the timing of the jitter window will thus stay synchronized in time with each other, and no relative drift needs to be compensated.

In the above, three different examples have been presented of how the prohibition time period can be implemented, wherein the explanations were provided primarily with respect to periodic uplink resources provided by configured grants. However, the three different examples and their underlying concepts apply equally to implementations in connection with periodic SR uplink resources and periodic SPS downlink resources, as will be explained in the following.

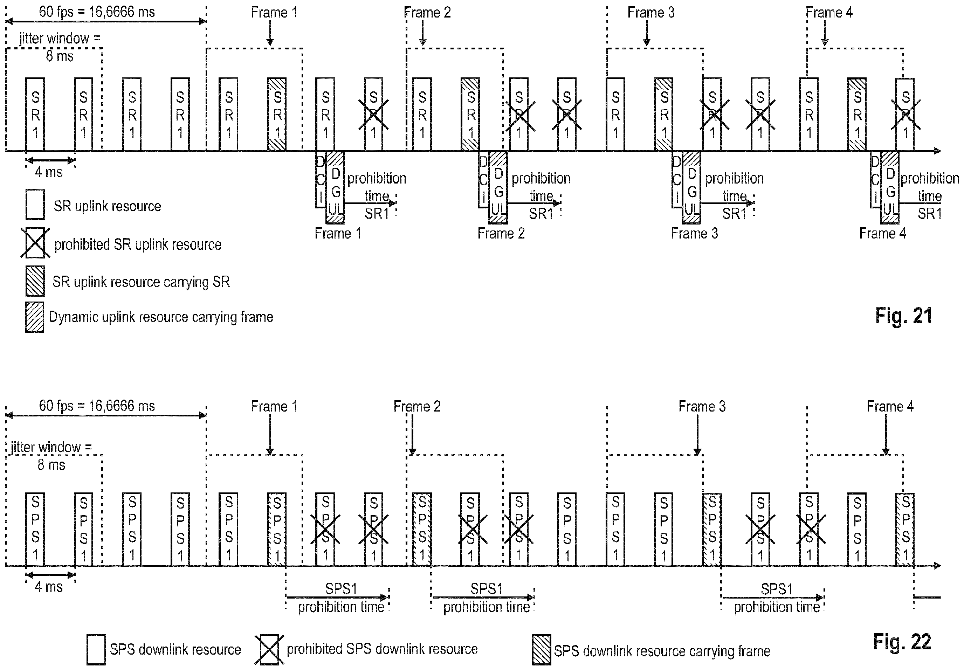

The following implementation will be described in connection with using a configured prohibition time value according to the above-described first example in a scenario, according to which periodic SR uplink resources and subsequent resources dynamically allocated by the base station to the UE are used to transmit the video frame data in the uplink to the base station. This will be explained in connection with **Fig. 21**, which is exemplarily based on similar assumptions as explained in connection with Fig. 8. According to the first example, the prohibition time period ends at the end of a configured prohibition time period that starts with reference to the dynamically allocated uplink resource used for transmitting the data of the video frame and has a length configured in advance.

Correspondingly, the UE has a suitable association between each of the different SR uplink resource configurations (and their periodic resources) and a prohibition time length. As mentioned above, in one example, the base station may be responsible for determining the association and its content and for providing the association to the UE, e.g. using the RRC protocol.

As apparent from Fig. 21, it is exemplarily assumed that the UE is configured with one set of SR uplink resources SR1, with a periodicity of 4 ms. The UE generates video Frame 1 and transmits a corresponding scheduling request in the next available periodic SR resource, here SR1. The base station allocates uplink resources, using e.g. a DCI. The UE then uses the dynamically allocated uplink resources to transmit the data of Frame 1. The prohibition time starts at the end of this dynamically-allocated uplink resource carrying the video frame data and spans the length associated with the SR configuration, here SR1. In this particular case, the prohibition time thus covers one further instance of the SR uplink resource of the SR configuration SR1. The prohibited SR uplink resources are crossed out in the illustration of Fig. 21. From the base station perspective, the base station receives the data of video Frame 1 in the dynamically allocated uplink resources, and being aware of the prohibit time length and behavior of the UE, the base station knows that the subsequent SR uplink resource SR1 is prohibited and will not be used by the UE to transmit another scheduling request in the uplink. Correspondingly, the base station can stop monitoring the prohibited SR uplink resource.

The above UE and BS behaviour is correspondingly applied and performed for transmitting the data of video Frame 2, 3 and 4 from the UE to the base station. As apparent from Fig. 21, the prohibition time thus may end well before the beginning of the next jitter window.

The following implementation will be described in connection with using a configured prohibition time value according to the above discussed first example in a scenario according to which periodic SPS downlink resources are used by the base station to transmit video frame data to the UE. This will be explained in connection with **Fig. 22**, which is exemplarily based on similar assumptions as explained in connection with Fig. 10. According to the first example, the prohibition time period ends at the end of a configured prohibition time period that starts with reference to the periodic SPS downlink resource used for transmitting the data of the video frame.

Correspondingly, the UE has a suitable association between each of the different SPS downlink configurations (and their periodic resources) with a prohibition time length. As mentioned above, in one example, the base station may be responsible for determining the association and its content and for providing the association to the UE, e.g. using the RRC protocol.

As apparent from Fig. 22, it is exemplarily assumed that the UE is configured with one set of SPS downlink resources SPS1, with a periodicity of 4 ms. The base station generates video Frame 1, and the next suitable SPS periodic resource is used by the base station to transmit the video frame data to the UE. The prohibition time starts at the end of this SPS downlink resource carrying the video frame data and spans the length associated with that SPS downlink configuration SPS1. In this particular case, the prohibition time thus covers two further instances of the SPS downlink resources of the SPS configuration SPS1. The two prohibited SPS downlink resources are crossed out in the illustration of Fig. 22. From the UE perspective, the UE receives the data of video Frame 1 in the SPS downlink resource, and being aware of the prohibit time length and behavior of the base station, the UE station knows that the subsequent two SPS downlink resources are prohibited and will not be used by base station to transmit further video frame data. Correspondingly, the UE can stop monitoring the prohibited SPS downlink resources.

The above UE and BS behaviour is correspondingly applied and performed for transmitting the data of video Frames 2, 3 and 4 from the base station to the UE. As apparent from Fig. 22, the prohibition time thus may end well before the beginning of the next jitter window, or may even partly overlap with the next jitter window, depending on the occurrence of the periodic SPS downlink resource with which the video frame data is transmitted to the UE.

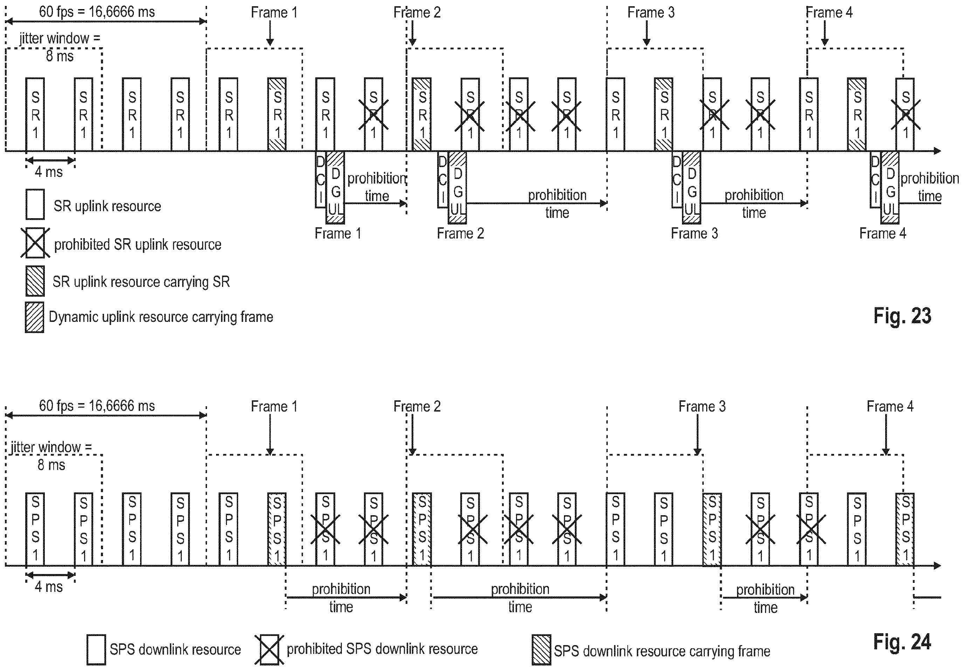

**Fig. 23** illustrates the above concepts being applied to a scenario according to which periodic SR resources and dynamically allocated uplink resources are used to transmit video frame data. In the exemplary illustration of Fig. 23, the prohibition time period is assumed to extend to the beginning of the next jitter window.

**Fig. 24** illustrates the above concepts being applied to a scenario according to which SPS downlink resources are used for transmitting the video frame data. In the exemplary illustration of fig. 24, the prohibition time period is assumed to extend to the beginning of the next jitter window.

The following implementations of the first solution relate to scenarios in which only part of the video frame data can be carried by a periodic SPS resource or periodic CG resource. In particular, the data size for video stream frames can vary and furthermore can be quite large. Therefore, a periodic CG resource or a periodic SPS resource may sometimes not suffice to transmit all the video frame data.

According to one exemplary implementation, the remaining data of the video frame, which could not be transmitted by the periodic SPS / CG resource, is transmitted using one or more dynamically allocated transmissions.

In one example, the prohibition time mechanism explained above in connection with the periodic SPS resources respectively periodic CG resources can still be triggered by the periodic SPS resource respectively CG resource, even in case said periodic SPS resource respectively CG resource does not carry all the video frame data. As a result, further periodic SPS / CG resources of the available SPS / CG configurations are prohibited for a period of time, according to one of the various implementations and variants explained above. Independently, the remaining video frame data can be exchanged in the DL/UL using resources dynamically allocated by the base station.

In another example, the prohibition time mechanism explained above in connection with the periodic SPS resources respectively periodic CG resources is not triggered by a periodic SPS resource respectively CG resource, which does not carry all the video frame data. Instead, a prohibition time mechanism is triggered by the subsequent video frame data transmission using the dynamically allocated resources. There is no need to trigger the prohibition based on the periodic SPS / CG resources. Rather, as will become apparent from below, dynamically indicating the prohibition time length is more flexible, Implementations in said respect will be explained in the following, separately for an SPS downlink case and for a CG uplink case.

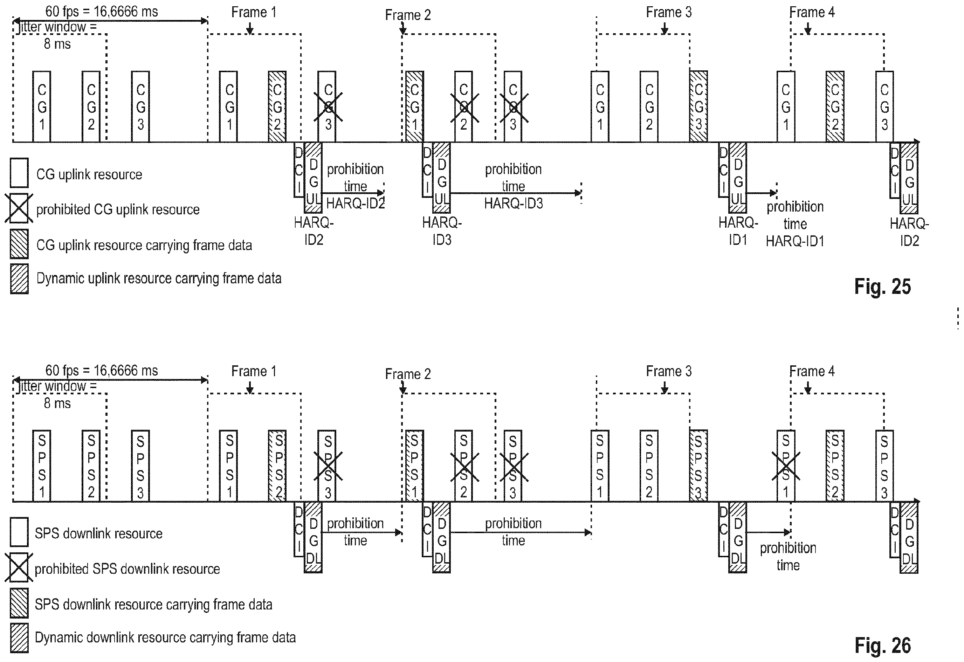

**Fig. 25** illustrates the exchange of video frame data using periodic CG uplink resources. The scenario of Fig. 25 is based on similar assumptions as in previous figures, thus e.g. assuming a video stream of 60 fps, a jitter window of 8ms, three separate sets of periodic CG uplink resources (CG configurations CG1, CG2, CG3, respectively with a periodicity of 16 ms). As apparent from Fig. 25, video Frames 1-4 are exemplary considered to be too large for the UE to be able to be transmit it completely using one of the periodic CG resources.

Accordingly, the UE determines whether or not all the data of the video frame was exchanged using the periodic CG resource. For Frame 1, the UE thus determines that not all data of the video frame could be transmitted in the uplink and does not trigger the prohibition mechanism. The UE will receive a dynamic uplink grant from the base station (in Fig. 25, DCI), such that the remaining data of the video frame can be transmitted by the UE using the dynamically allocated uplink resources.

When the remaining data for the video frame was transmitted by use of the dynamically granted uplink resources, the use of further periodic uplink CG resources according to the available CG configurations is prohibited for a period of time.

As explained already above for the previous implementation of the prohibition time mechanism, the prohibition time period can be implemented such that it ends before radio resources according to the one or more periodic-resources configurations are to be used for exchanging data of a subsequent video frame of the video application, the subsequent video frame being directly subsequent to that video frame that triggered the prohibition. Three different examples of how the prohibition time period can be implemented were explained above, the first example being based on a prohibition time length configured in advance (see e.g. Fig. 17), the second example being based on flexibly extending the prohibition time period until the beginning of the next jitter window (see e.g. Fig. 18), and the third example being based on flexibly extending the prohibition time period until the beginning of a periodic resource (e.g. the first-occurring, or second-occurring, etc.) overlapping the next jitter window (see e.g. Fig. 19). These three different examples are also applicable in a corresponding manner to the prohibition time period to be triggered by a dynamically-allocated transmission of video frame data.

Fig. 25 is based on the first example and assumes a configured prohibition time length. According to the first example explained above, the configured prohibition time length is associated with the periodic CG resource. This can also be applied to the scenarios where the prohibition is triggered by the dynamically allocated transmission of the video frame data, namely by using that prohibition time length that is associated with the periodic CG resource used for the initial, incomplete, transmission of the video frame data. Alternatively the prohibition time length to be applied is instead associated with a HARQ-ID. The HARQ protocol is an exemplary implementation of a retransmission protocol used between the UE and the base station for the exchange of data. Retransmission protocols may for instance include different retransmission-protocol processes that operate separately for allowing the retransmission of data (possibly also the subsequent combination of the initially-transmitted data and the retransmitted data). In this particular explanation of the implementation, it is exemplary assumed that a HARQ protocol is used between the UE and the base station, and thus that the dynamic uplink grant indicates a HARQ-ID (as an example of a retransmission-protocol process ID) to be used by the UE and base station, and the UE determines the length of the prohibition time period by determining that value that is associated with the indicated HARQ ID.

Correspondingly, an association between different HARQ IDs and the respective prohibition time values to be used for CG can be defined in advance, e.g. as configured by the base station. The UE thus determines the prohibition time based on said indicated HARQ ID and the stored HARQ-ID-prohibition-value association. In one example, the base station may be responsible for determining the association and its content and for providing information on the association to the UE, e.g. using the RRC protocol.

The base station can for instance configure different lengths of the prohibition time period in association with different HARQ IDs. Therefore, the base station, when granting the uplink resources to the UE, can determine a suitable prohibition time length, e.g. based on the timing of the uplink grant. For instance, the base station may select the prohibition time length among all the available lengths associated with a HARQ ID. Then, the base station determines the HARQ ID that is associated with the selected prohibition time length, and indicates said HARQ ID in the dynamic uplink grant to be transmitted to the UE.

As apparent from Fig. 25, HARQ ID 3 is associated with a comparatively long prohibition time length and could be indicated by the base station so as to facilitate a comparatively large power gain. For instance, the HARQ ID 3 can be indicated by the base station, when the dynamic uplink grant occurs at an early time of the video frame periodicity (e.g. far away from the next jitter window). HARQ ID 1 is associated with a comparatively short prohibition time length, thus allowing less power gain. For instance, HARQ ID 1 can be indicated by the base station, when the dynamic uplink grant occurs at a late time of the video frame periodicity (e.g. shortly before the next jitter window).

The description of the UE and base station behaviour in connection with Fig. 25 applies correspondingly for the exchange of video frame data using periodic SPS uplink resources. **Fig. 26** illustrates an exemplary exchange and is based on the same assumptions as in Fig 25. As apparent from Fig. 26, video Frames 1-4 are exemplary considered to be too large for the base station to be able to transmit it completely using one of the periodic SPS resources.

Accordingly, the base station determines whether or not all the data of the video frame was exchanged using the periodic SPS resource. For Frame 1, the base station thus determines that not all data of the video frame could be transmitted in the uplink and does not trigger the prohibition mechanism. The base station thus prepares and transmits a dynamic downlink grant to the UE (in Fig. 26, DCI), such that the remaining data of the video frame can be transmitted to the UE using the dynamically allocated downlink resources.

When the remaining data for the video frame was transmitted by use of the dynamically granted downlink resources, the use of further periodic downlink SPS resources according to the available SPS configurations is prohibited for a period of time.

As already explained in detail with respect to Fig. 25, the three different examples of how the prohibition time period can be implemented are also applicable in a corresponding manner to the prohibition time period to be triggered by a dynamically-allocated downlink transmission of video frame data. Consequently, when using the first example, the prohibition time length configured in advance can be determined e.g. based on the associated SPS resource via which the initially, incomplete, downlink transmission of the video frame data was performed. Alternatively, the prohibition time length to be applied is associated with a HARQ-ID. The dynamic downlink grant indicates a HARQ-ID (as an example of a retransmission-protocol process ID) to be used by the UE and base station, and the UE determines the length of the prohibition time period by determining that value that is associated with the indicated HARQ ID.

Correspondingly, an association between different HARQ IDs and the respective prohibition time values to be used for SPS can be defined in advance, e.g. as configured by the base station. The UE thus determines the prohibition time based on said indicated HARQ ID and the stored HARQ-ID-prohibition-value association. In one example, the base station may be responsible for determining the association and its content and for providing information on the association to the UE, e.g. using the RRC protocol.

The base station can for instance configure different lengths of the prohibition time period in association with different HARQ IDs. Therefore, the base station, when granting the downlink resources to the UE, can determine a suitable prohibition time length, e.g. based on the timing of the downlink grant. For instance, the base station may select the prohibition time length among all the available lengths associated with a HARQ ID. Then, the base station determines the HARQ ID that is associated with the selected prohibition time length, and indicates said HARQ ID in the dynamic downlink grant to be transmitted to the UE.

In one exemplary implementation, the association between different HARQ IDs and the respective prohibition time values can be commonly defined for being used for SPS and CG. Or, separate associations between different HARQ IDs and the respective prohibition time values can be defined for being used for SPS and CG, thus increasing the flexibility of the configurations.

However, as indicated above, also the second and third example of how the prohibition time period can be implemented are applicable. While Fig. 25 was based on the first example, the exemplary illustration of Fig. 26 for an SPS scenario is based on the second example, i.e. where the prohibition time reaches in a flexible manner to the next jitter window. Correspondingly, according to the second example, there is no need to rely on a previously-defined association between different lengths of the prohibition time period and SPS configurations or HARQ-IDs. Rather, due to the knowledge of the timing of the jitter window, the UE and base station can extend the prohibition length in a flexible manner to the beginning of the jitter window. Therefore, it is possible that more or less periodic resources are prohibited. For instance, when comparing the examples of Fig. 25 and Fig. 26, the prohibition time period for Frame 3 according to the second example (see Fig. 26) allows to additionally prohibit the use of the periodic SPS1 resource overlapping with the beginning of the jitter window relating to Frame 4. Here, it is exemplarily assumed that a periodic resource, which overlaps the end of the prohibition time period, is considered to be prohibited as a whole.

In the above implementations, it was assumed that the base station dynamically grants resources (be it in DL or UL) to transmit the remaining video frame data that could not be fully transmitted in the initial SPS resource respectively initial CG resource.

With respect to the downlink transmission of video frame data using periodic SPS resources, the base station is aware that not all the video frame data was transmitted in the periodic SPS resource. Accordingly, the base station can transmit a dynamic downlink assignment to the UE (e.g. DCI), indicating the downlink resources that the base station will use to transmit the remaining video frame data, after the periodic SPS resource. In one example, the UE my to determine whether the received video frame data is complete or not, e.g. from the video frame data itself. Alternatively, the base station transmits a suitable indication, together with the incomplete video frame data, indicating that the video frame data is incomplete The UE monitors the corresponding downlink control channel, via which the dynamic downlink assignment is transmitted by the base station, and thus receives the dynamic downlink assignment and learns that at least a further downlink transmission of video frame data will take place. Correspondingly, the UE will be able to receive the remaining video frame data via the dynamically allocated downlink resources.

With respect to the uplink transmission of video frame data using periodic CG resources, the UE is aware that no all the video frame data was transmitted in the periodic CG resource. The base station, when receiving the incomplete video frame data in the periodic CG resource, can determine whether the received video frame data is complete or not. For instance, the base station might determine whether the received video frame data is complete or not, from the video frame data itself. Another possibility could be that the UE transmits a suitable indication together with the incomplete video frame data, indicating that the respective video frame data is incomplete. In one example, such an indication can be in the form of a buffer status report (BSR), which indicates to the base station that there is still further video frame data in the buffer of the UE. From the buffer status report, the base station is also able to obtain information on how much further uplink resources are required by the UE to transmit all of the remaining video frame data. For instance, this information can be taken into account by the base station when dynamically allocating uplink resources to the UE.

In any case, the base station can thus grant uplink resources for one or more uplink transmissions by the UE, so as to carry all the remaining video frame data to the base station.

As has been described above, the prohibition time mechanism is triggered by a dynamically-allocated transmission of the remaining video frame data in the uplink or downlink. In one example, the beginning of the prohibition time length can be the received message allocating the DL or UL resources (e.g. DCI). Correspondingly, when the UE receives the allocation message, the UE learns that the remaining video frame data will be exchanged based on the dynamically allocated resources and can prohibit the use of further periodic resources for the prohibition duration.

According to another example, the beginning of the prohibition can be the actual transmission of the remaining video frame data.

As has been described above, the base station may decide to grant more than one uplink resource transmissions for the UE to transmit the remaining video frame data. In such scenarios, the prohibition time mechanism is triggered by the (last) transmission carrying the last part of the remaining video frame data. In other words, when the UE respectively the base station determines that a dynamically allocated transmission of the remaining video frame data still does not carry all of the remaining video frame data, then the UE respectively base station does not trigger the prohibition mechanism. Rather, the UE respectively base station again performs the determination whether or not a dynamically allocated transmission of the remaining video frame data carries all of the remaining video frame data, and if so, the prohibition mechanism is triggered.

### Second solution

In the above, an implementation of the first solution was described in connection with Fig. 25 and 26 on how to handle the problematic scenario in which only part of the video frame data can be carried by a periodic SPS resource or a periodic CG resource. Said above implementation was described as part of the first solution, thus for instance as being an additional mechanism on top of the mechanism that implements a prohibition time for the periodic SPS resource respectively periodic CG resource. However, according to the present second solution, said above implementation explained in connection with Fig. 25 and 26 can also be implemented as a standalone and independent mechanism of an improved transmission procedure, in which there is no prohibition mechanism for the periodic SPS resources respectively periodic CG resources.

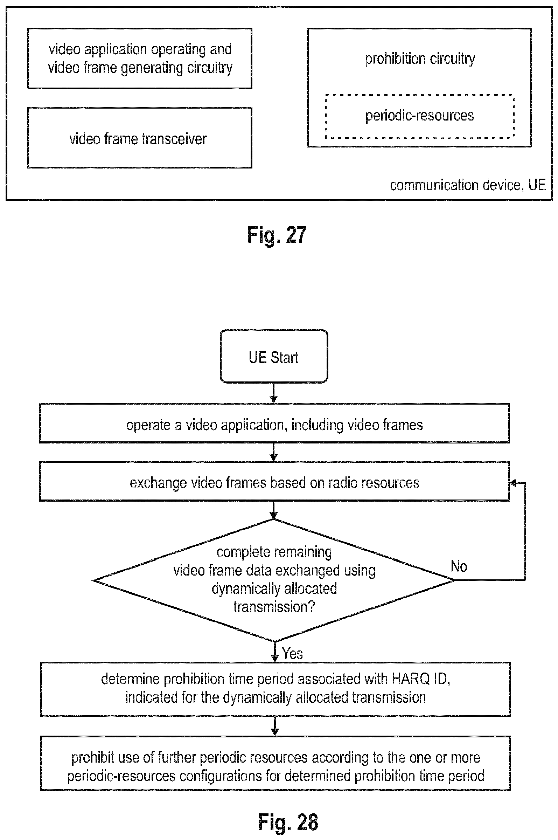

**Fig. 27** illustrates a simplified and exemplary UE structure, which can be basically identical to the one provided for the first solution. For instance, an exemplary implementation of the improved transmission procedure of the second solution can be implemented based on the general UE structure explained in connection with Fig. 11. The various structural elements of the UE illustrated in said Fig. 27 can be interconnected between one another e.g. with corresponding input/output nodes (not shown) e.g. in order to exchange control and user data and other signals. Although not shown for illustration purposes, the UE may include further structural elements.

As apparent from Fig. 27, the UE may include a video application operating circuitry and video frame generating circuitry, a video frame transceiver for transmitting and receiving video frames, and a prohibition circuitry with access to periodic resources.

One exemplary procedure as will be disclosed in more detail further below is implemented by a UE that includes the following. Processing circuitry of the UE operates a video application, according to which video frames are generated with a video frame periodicity. Each video frame is generated within a jitter window having a jitter window length. A transceiver of the UE uses radio resources for exchanging one or more video frames of the video application between the UE and a base station. Radio resources are determined by the UE based on one or more periodic-resources configurations. A first part of the video frame data can be exchanged based on a periodic resource according to one of the one or more periodic-resources configurations. As explained above in relation to Fig. 25 and 26, the remaining video frame data is then to be exchanged using one or more dynamically allocated transmissions.

The UE then determines for such a dynamically allocated transmission, whether the complete remaining video frame data is exchanged using this dynamically allocated transmission (be it DL or UL). If so, the processing circuitry determines to prohibit the use of further periodic radio resources according to the one or more periodic-resources configurations for a period of time.

A corresponding exemplary method comprises the following steps performed by a UE:
- operating a video application, according to which video frames are generated with a video frame periodicity, wherein each video frame is generated within a jitter window having a jitter window length,
- using radio resources for exchanging one or more video frames of the video application between the UE and a base station, the radio resources being determined by the UE based on one or more periodic-resources configurations,
- exchanging part of the video frame using a periodic radio resource according to one of the one or more periodic-resources configurations.
- exchanging the remaining video frame data using one or more dynamically allocated transmissions,
- determining for such a dynamically allocated transmission, whether the complete remaining video frame data is exchanged using this dynamically allocated transmission (be it DL or UL),
- if so, determining to prohibit the use of further periodic radio resources according to the one or more periodic-resources configurations for a period of time.

A corresponding sequence diagram for an exemplary UE behaviour in line with the above-discussed UE and UE method is illustrated in **Fig. 28**. As apparent therefrom, it exemplary assumed for said illustration that the prohibition time length is implemented based on a prohibition time length that is configured in advance (see above first example, e.g. see Fig. 25) and that is associated with the HARQ ID indicated for the dynamically allocated transmission (see Fig. 25).

One exemplary procedure is implemented by a base station that corresponds to the UE behaviour.

In connection with the first solution, variants have been explained on how the prohibition mechanism can be implemented for a dynamically allocated transmission. These can be equally applied to the present second solution, which is merely a standalone solution. In order to avoid mere repetition, reference is made to the above explanations. In brief summary, the second solution can be operated such that the prohibition time period ends before radio resources according to the one or more periodic-resources configurations are to be used for exchanging data of a subsequent video frame of the video application, the subsequent video frame being directly subsequent to that video frame that triggered the prohibition. Correspondingly, any one of the first to third examples of how to implement the prohibition time period can be used for the second solution. Furthermore, for the first example, the prohibition time length can be defined in advance based on e.g. the periodic resource used to exchange the initial, incomplete, video frame data, or based on the retransmission-protocol-process ID (e.g. HARQ-ID) indicated for the dynamically-allocated transmission.

Moreover, in one exemplary implementation, the association between different HARQ IDs and the respective prohibition time values can be commonly defined for being used for SPS and CG or can be defined separately.

Further, the UE respectively base station can determine whether the received video frame data or the transmitted video frame data is complete as explained above, e.g. based on the video frame data itself or based on a suitable indication transmitted together with the video frame data (such as the buffer status report).

The prohibition time length may begin with the received message allocating the DL or UL resources (e.g. DCI) or with the actual transmission of the remaining video frame data.

In instances, where the remaining video frame data is exchanged based on more than one dynamically allocated transmissions, the prohibition time mechanism is triggered by the (last) transmission carrying the last part of the remaining video frame data.

### Further Aspects

According to a first aspect, a user equipment, is provided that includes the following. Processing circuitry of the UE operates a video application, according to which video frames are generated with a video frame periodicity. Each video frame is generated within a jitter window having a jitter window length. A transceiver of the UE uses radio resources for exchanging one or more video frames of the video application between the UE and a base station. The radio resources are determined by the UE based on one or more periodic-resources configurations. When the processing circuitry determines that data for a video frame, generated during one jitter window, was exchanged by use a periodic resource of one of the one or more periodic-resources configurations, the processing circuitry determines to prohibit the use of further periodic radio resources according to the one or more periodic-resources configurations for a period of time.

According to a second aspect provided in addition to the first aspect, the prohibition time period is such that it ends before radio resources according to the one or more periodic-resources configurations are to be used for exchanging data of a subsequent video frame of the video application. The subsequent video frame is directly subsequent to that video frame that triggered the prohibition.

In an optional implementation of the second aspect, the prohibition time period ends:
- at the end of a configured prohibition time period that starts with reference to the periodic resource used for exchanging the data of the video frame,
- at the beginning of a next jitter window, the next jitter window being directly next to the one jitter window, or
- at the beginning of a first-occurring or later- occurring periodic resource of one of the one or more periodic-resources configurations that overlaps a next jitter window.

According to a third aspect provided in addition to the first or second aspect, the one or more periodic-resource configurations are one or more configured uplink resource grants. The processing circuitry, upon generation of the video frame of the video application, determines a periodic uplink resource for transmitting data of the generated video frame to the base station according to one configured uplink resource grant. The transceiver transmits the data of the generated video frame of the video application to the base station using the determined periodic uplink resource according to the one configured uplink resource grant. When the processing circuitry determines that the data of the generated video frame of the video application was transmitted to the base station using the periodic uplink resource according to the one configured uplink resource grant, the processing circuitry determines to prohibit use of further periodic uplink resources according to the one or more configured uplink resource grants for the prohibition time period.

According to a fourth aspect provided in addition to the third aspect, the processing circuitry determines the prohibition time period based on:
- a prohibition time value, associated with the one configured uplink resource grant whose periodic uplink resource was used to transmit the data of the generated video frame to the base station.

In an optional implementation of the fourth aspect, the determining of the prohibition time period based on the prohibition value is further based on a CG-prohibition-value association associating each of the one or more configured uplink resource grants with a respective prohibition time value. Optionally, the CG-prohibition-value association is received from the base station, e.g. in a message of the Radio Resource Control, RRC, protocol.

According to a fifth aspect, provided in addition to the third aspect, the processing circuitry determines the prohibition time period based on the timing of the next jitter window.

In an optional implementation of the fifth aspect, the processing circuity determines the timing of the next jitter window, based on :
- information on the timing of the jitter windows of the video application, optionally provided by a UE layer handling the video application for a UE layer handling the prohibition, using inter-layer communication, or
- one or more of the video frame periodicity and a time at which video frames are generated for the video application.

In a further optional implementation of the fifth aspect the transceiver transmits information on the timing of the jitter window of the video application to the base station.

According to a sixth aspect, provided in addition to one of the first to fifth aspects, the one or more periodic-resource configurations are one or more semi-persistent scheduling, SPS, downlink resource configurations. The processing circuitry monitors periodic downlink resources for receiving one or more video frames of the video application from the base station according to the one or more SPS downlink resource configurations with which the UE is configured. The transceiver receives data of the video frame of the video application from the base station using a periodic downlink resource according to one of the one or more SPS downlink resource configurations. When the processing circuitry determines that the data of the video frame of the video application was received from the base station in the periodic downlink resource according to the one SPS downlink resource configuration, the processing circuitry determines to prohibit use of further periodic downlink resources according to the one or more SPS downlink resource configurations for the prohibition time period.

In an optional implementation of the sixth aspect, the prohibiting of the use of the further periodic downlink resources includes that the UE does not need to monitor the further periodic downlink resources for possible downlink data of video frames from the base station. In the further optional implementation, the prohibiting of the use of the further periodic downlink resources includes that the UE does not need to transmit, to the base station, uplink control information regarding reception feedback for potential downlink data received according to the further periodic downlink resources.

According to a seventh aspect provided in addition to the sixth aspect, the processing circuitry determines the prohibition time period based on:
- a prohibition time value, associated with the one SPS downlink resource configuration that provides the periodic downlink resource via which the data of the video frame was received from the base station.

In an optional implementation of the seventh aspect, the determining of the prohibition time period based on the prohibition value is further based on an SPS-prohibition-value association associating each of the SPS downlink resource configurations with a respective prohibition time value. Optionally, the SPS-prohibition-value association is received from the base station, e.g. in a message of the Radio Resource Control, RRC, protocol.

According to an eighth aspect provided in addition to sixth aspect, the processing circuitry determines the prohibition time period based on:
- the timing of the next jitter window.

In an optional implementation of the eighth aspect, the processing circuity determines the timing of the next jitter window based on :
- information on the timing of the jitter windows of the video application, received from the base station, or
- one or more of the video frame periodicity and a time at which video frames for the video application are received from the base station.

According to a ninth aspect provided in addition to any one of the first to eight aspects, the one or more periodic-resource configurations are one or more, scheduling request, SR, uplink resource configurations. The UE is configured with periodic scheduling request, SR, resources for transmitting a scheduling request to the base station according to the one or more SR uplink resource configurations, the scheduling request requesting the base station to grant uplink resources to the UE. The processing circuitry, upon generation of the video frame of the video application, determines a periodic SR uplink resource according to one of the one or more SR uplink resource configurations for transmitting a scheduling request to the base station to request uplink resources for transmitting the data of the generated video frame. The transceiver transmits a scheduling request to the base station using the periodic SR resource according to the one SR uplink resource configurations. The transceiver transmits the data of the generated video frame of the video application to the base station using uplink resources dynamically granted by the base station in response to the UE having transmitted the scheduling request. When the processing circuitry determines that the data of the generated video frame of the video application was transmitted to the base station using the uplink resources dynamically granted by the base station in response to the UE having transmitted the scheduling request to the base station using the periodic SR resource of the one SR uplink resource configuration, the processing circuitry determines to prohibit use of further periodic SR resources according to the one or more SR uplink resource configurations for the prohibition time period.

According to a tenth aspect provided in addition to the ninth aspect, the processing circuitry determines the prohibition time period based on:
- a prohibition time value, associated with the one SR uplink resource configuration whose periodic SR uplink resource was used to transmit the scheduling request to the base station.

In an optional implementation of the 10^{th} aspect, the determining of the prohibition time period based on the prohibition value is further based on an SR-prohibition-value association associating each of the SR uplink resource configurations with a respective prohibition time value. Optionally, the SR-prohibition-value association is received from the base station, e.g. in a message of the Radio Resource Control, RRC, protocol.

According to an eleventh aspect provided in addition to the ninth aspect, the processing circuitry determines the prohibition time period based on:
- the timing of the next jitter window.

In an optional implementation of the 11^{th} aspect, the processing circuity determines the timing of the next jitter window, based on:
- information on the timing of the jitter windows of the video application provided by a UE layer handling the video application for a UE layer handling the prohibition, using inter-layer communication, or
- one or more of the video frame periodicity and a time at which video frames are generated for the video application.

Optionally, the transceiver transmits information on the timing of the jitter window of the video application to the base station.

According to a twelfth aspect provided in addition to any one of the first to eleventh aspects, the processing circuitry determines whether or not all the data of the video frame of the video application was exchanged using the periodic resource according to the one periodic-resources configurations. In case not all data of the video frame of the video application was exchanged, the remaining data of the video frame is exchanged using one or more resources dynamically granted by the base station. When the processing circuitry determines that the remaining data for the video frame was exchanged by use of the dynamically granted one or more resources. The processing circuitry determines to prohibit the use of further periodic resources according to the one or more periodic-resources configurations for a period of time.

According to a thirteenth aspect, provided in addition to the twelfth aspect, the processing circuitry determines the prohibition time period based on a prohibition time value, associated with a retransmission protocol process to be used for the exchange of the remaining data of the video frame. The dynamic grant by the base station indicates the retransmission protocol process.

In an optional implementation of the 13^{th} aspect, the determining of the prohibition time period based on the prohibition value is further based on a retransmission-protocol-prohibition-value association associating each of one or more retransmission protocol processes with a respective prohibition time value. Optionally, the retransmission-protocol-prohibition-value association is received from the base station, e.g. in a message of the Radio Resource Control, RRC, protocol.

In a further optional implementation, in case two or more resources are dynamically granted by the base station for exchange of the remaining data of the video frame, the determining of the prohibition time period is based on the prohibition value associated with that retransmission protocol process to be used for the last-occurring exchange of the remaining data of the video frame. Optionally, the retransmission protocol process is a Hybrid-automatic repeat request, HARQ, process, Optionally, the start of the prohibition time period is the reception of a dynamic resource control information or the transmission of the remaining data using the dynamically granted one or more resources.

According to a fourteenth aspect, provided in addition to any one of the first to thirteenth aspects, the video application is an application for eXtended Reality, XR. Further, an SPS downlink resource configuration configures a set of periodic downlink resources usable by the base station to transmit downlink data to the UE without receiving individual downlink scheduling information via downlink control information. Further, a configured uplink resource grant configures a set of periodic uplink resources usable by the UE to transmit uplink data to the base station without a prior scheduling request from the UE to the base station. Further, a scheduling-request uplink resource configuration configures a set of periodic uplink resources usable by the UE to transmit a scheduling request to the base station without a prior scheduling request from the UE to the base station.

According to a fifteenth aspect, a method is provided comprising the following steps performed by a user equipment, UE:
operating a video application, according to which video frames are generated with a video frame periodicity, wherein each video frame is generated within a jitter window having a jitter window length,
using radio resources for exchanging one or more video frames of the video application between the UE and a base station, the radio resources being determined by the UE based on one or more periodic-resources configurations,
when determining that data for a video frame of the video application, generated during one jitter window, was exchanged by use a periodic resource of one of the one or more periodic-resources configurations, determining to prohibit the use of further periodic radio resources according to the one or more periodic-resources configurations for a period of time.

According to a sixteenth aspect, V a base station is provided comprising the following. Processing circuitry of the base station operates a video application, according to which video frames are generated with a video frame periodicity. Each video frame is generated within a jitter window having a jitter window length. A transceiver of the base station uses radio resources for exchanging one or more video frames of the video application between a UE and the base station, the radio resources being determined by the base station based on one or more periodic-resources configurations. When the processing circuitry determines that data for a video frame of the video application, generated during one jitter window, was exchanged by use a periodic resource of one of the one or more periodic-resources configurations, the processing circuitry determines to prohibit the use of further periodic radio resources according to the one or more periodic-resources configurations for a period of time.

According to a seventeenth aspect, provided in addition to the 16^{th} aspect, the one or more periodic-resource configurations are one or more configured uplink resource grants. The processing circuitry monitors periodic uplink resources for receiving one or more video frames of the video application from the UE according to the one or more configured uplink resource grants. The transceiver receives the data of the video frame of the video application from the UE using one periodic uplink resource according to one of the configured uplink resource grants. When the processing circuitry determines that the data of the video frame of the video application was received from the UE in the periodic uplink resource according to the one configured uplink resource grant, the processing circuitry determines to prohibit use of further periodic uplink resources according to the one or more configured uplink resource grants for the prohibition time period.

In an optional implementation of the 17^{th} aspect, the prohibiting of the use of the further periodic uplink resources includes that the base station does not need to monitor the further periodic uplink resources for possible uplink data of video frames from the UE. Further optionally, the prohibiting of the use of the further periodic uplink resources includes that the base station does not need to transmit, to the UE, downlink control information regarding reception feedback for potential uplink data received according to the further periodic uplink resources

According to a eighteenth aspect, provided in addition to the 17^{th} aspect, the processing circuitry determines the prohibition time period based on:
- a prohibition time value, associated with the one configured uplink resource grant whose periodic uplink resource was used to receive the data of the generated video frame from the UE.

In an optional implementation of the 18^{th} aspect, the determining of the prohibition time period based on the prohibition value is further based on a CG-prohibition-value association associating each of the one or more configured uplink resource grants with a respective prohibition time value. Optionally, the CG-prohibition-value association is transmitted to the UE, e.g. in a message of the Radio Resource Control, RRC, protocol.

According to a nineteenth aspect, provided in addition to the 17th aspect, the processing circuitry determines the prohibition time period based on:
- the timing of the next jitter window.

In an optional implementation, the processing circuity determines the timing of the next jitter window based on:
- information on the timing of the jitter windows of the video application, received from the UE, or
- one or more of the video frame periodicity and a time at which video frames for the video application are received from the UE.

According to a 20^{th} aspect, provided in addition to any one of the 16 to nineteenth aspects, the one or more periodic-resource configurations are one or more semi-persistent scheduling, SPS, downlink resource configurations, wherein the processing circuitry, upon generation of the video frame of the video application, determines a periodic downlink resource for transmitting data of the generated video frame to the UE according to one SPS downlink resource configuration. The transceiver transmits the data of the generated video frame of the video application to the UE using the determined periodic downlink resource according to the one SPS downlink resource configuration. When the processing circuitry determines that the data of the generated video frame of the video application was transmitted to the UE using the periodic downlink resource according to the one SPS downlink resource configuration, the processing circuitry determines to prohibit use of further periodic downlink resources according to the one or more SPS downlink resource configurations for the prohibition time period.

According to a 21^{st} aspect, provided in addition to the 20^{th} aspect, the processing circuitry determines the prohibition time period based on:
- a prohibition time value, associated with the one SPS downlink resource configuration that provides the periodic downlink resource via which the data of the video frame was transmitted to the UE.

In an optional implementation of the 21^{st} aspect, the determining of the prohibition time period based on the prohibition value is further based on an SPS-prohibition-value association associating each of the SPS downlink resource configurations with a respective prohibition time value. Optionally, the SPS-prohibition-value association is transmitted to the UE, e.g. in a message of the Radio Resource Control, RRC, protocol.

According to a 22^{nd} aspect, provided in addition to the 20^{th} aspect, the processing circuitry determines the prohibition time period based on:
- the timing of the next jitter window.

In an optional implementation of the 22^{nd} aspect, the processing circuity determines the timing of the next jitter window based on :
- information on the timing of the jitter windows of the video application, optionally provided by a BS layer handling the video application for a BS layer handling the prohibition, using inter-layer communication, or
- one or more of the video frame periodicity and a time at which video frames for the video application are generated for the video application.

Optionally, the transceiver transmits information on the timing of the jitter window of the video application to the UE.

According to a 23^{rd} aspect, provided in addition to any one of the 16^{th} to 22^{nd} aspects, the one or more periodic-resource configurations are one or more, scheduling request, SR, uplink resource configurations. The UE is configured with periodic scheduling request, SR, resources for transmitting a scheduling request to the base station according to the one or more SR uplink resource configurations. The scheduling request requests the base station to grant uplink resources to the UE. The processing circuitry, upon generation of the video frame of the video application, monitors the periodic SR uplink resources according to the one or more SR uplink resource configurations for receiving a scheduling request from the UE for requesting uplink resources for transmitting data of a video frame. The transceiver receives a scheduling request from the UE using the periodic SR resource according to the one SR uplink resource configurations. The transceiver transmits a grant of uplink resources to the UE and receives data of the video frame of the video application from the UE using the uplink resources dynamically granted by the base station. When the processing circuitry determines that the data of the generated video frame of the video application was received from the UE using the uplink resources dynamically granted by the base station in response to the UE having transmitted the scheduling request to the base station using the periodic SR resource of the one SR uplink resource configuration, the processing circuitry determines to prohibit use of further periodic SR resources according to the one or more SR uplink resource configurations for the prohibition time period.

In an optional implementation thereof, the prohibiting of the use of the further periodic SR resources includes that the base station does not need to monitor the further periodic SR resources for receiving a scheduling request.

According to a 24^{th} aspect, provided in addition to the 23^{rd} aspect, the processing circuitry determines the prohibition time period based on:
- a prohibition time value, associated with the one SR uplink resource configuration whose periodic SR uplink resource was used to receive the scheduling request from the UE.

In an optional implementation thereof, the determining of the prohibition time period based on the prohibition value is further based on an SR-prohibition-value association associating each of the SR uplink resource configurations with a respective prohibition time value. Optionally, the SR-prohibition-value association is transmitted to the UE, e.g.in a message of the Radio Resource Control, RRC, protocol.

According to a 25^{th} aspect, provided in addition to the 23^{rd} aspect, the processing circuitry determines the prohibition time period based on:
- the timing of the next jitter window.

In an optional implementation thereof, the processing circuity determines the timing of the next jitter window, based on:
- information on the timing of the jitter windows of the video application received from the UE, or
- one or more of the video frame periodicity and a time at which video frames are received from the UE.

According to a 26^{th} aspect, provided in addition to any one of the 16^{th} to 25^{th} aspects, the processing circuitry determines whether or not all the data of the video frame of the video application was exchanged using the periodic resource according to the one periodic-resources configurations. In case not all data of the video frame of the video application was exchanged, the remaining data of the video frame is exchanged using one or more resources dynamically granted by the base station. When the processing circuitry determines that the remaining data for the video frame was exchanged by use of the dynamically granted one or more resources, the processing circuitry determines to prohibit the use of further periodic resources according to the one or more periodic-resources configurations for a period of time. According to a 27^{th} aspect, provided in addition to the 26^{th} aspect, the processing circuitry determines the prohibition time period and determines a retransmission protocol process associated with the determined prohibition time period, wherein a retransmission protocol process is used for the exchange of the remaining data of the video frame. The transceiver transmits a dynamic grant of resources to the UE, wherein the dynamic grant indicates the determined retransmission protocol process.

An optional implementation thereof, the determining of the retransmission protocol process is further based on a retransmission-protocol-prohibition-value association associating each of one or more retransmission protocol processes with a respective prohibition time value. Optionally, the retransmission-protocol-prohibition-value association is transmitted to the UE, e.g. in a message of the Radio Resource Control, RRC, protocol.

Optionally, in case two or more resources are dynamically granted by the base station for exchange of the remaining data of the video frame, the determining of the prohibition time period and of the retransmission protocol process is performed for the last-occurring exchange of the remaining data of the video frame. Optionally, the retransmission protocol process is a Hybrid-automatic repeat request, HARQ, process

According to a 28^{th} aspect, a method is provided comprising the following steps performed by a base station:
operating a video application, according to which video frames are generated with a video frame periodicity, wherein each video frame is generated within a jitter window having a jitter window length,
using radio resources for exchanging one or more video frames of the video application between a UE and the base station, the radio resources being determined by the base station based on one or more periodic-resources configurations,
when determining that data for a video frame of the video application, generated during one jitter window, was exchanged by use a periodic resource of one of the one or more periodic-resources configurations, determining to prohibit the use of further periodic radio resources according to the one or more periodic-resources configurations for a period of time.

According to a 29^{th} aspect, an integrated circuit is provided controls a process of a user equipment, the process comprising the following steps performed by the user equipment:
operating a video application, according to which video frames are generated with a video frame periodicity, wherein each video frame is generated within a jitter window having a jitter window length,
using radio resources for exchanging one or more video frames of the video application between the UE and a base station, the radio resources being determined by the UE based on one or more periodic-resources configurations,
when determining that data for a video frame of the video application, generated during one jitter window, was exchanged by use a periodic resource of one of the one or more periodic-resources configurations, determining to prohibit the use of further periodic radio resources according to the one or more periodic-resources configurations for a period of time.

According to a 30^{th} aspect, an integrated circuit is provided controls a process of a base station, the process comprising the following steps performed by the base station:
operating a video application, according to which video frames are generated with a video frame periodicity, wherein each video frame is generated within a jitter window having a jitter window length,
using radio resources for exchanging one or more video frames of the video application between a UE and the base station, the radio resources being determined by the base station based on one or more periodic-resources configurations,
when determining that data for a video frame of the video application, generated during one jitter window, was exchanged by use a periodic resource of one of the one or more periodic-resources configurations, determining to prohibit the use of further periodic radio resources according to the one or more periodic-resources configurations for a period of time.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
processing circuitry, which in operation, operates a video application, according to which video frames are generated with a video frame periodicity, wherein each video frame is generated within a jitter window having a jitter window length,
a transceiver, which in operation, uses radio resources for exchanging one or more video frames of the video application between the UE and a base station, the radio resources being determined by the UE based on one or more periodic-resources configurations,
wherein when the processing circuitry determines that data for a video frame of the video application, generated during one jitter window, was exchanged by use a periodic resource of one of the one or more periodic-resources configurations, the processing circuitry determines to prohibit the use of further periodic radio resources according to the one or more periodic-resources configurations for a period of time.

2. The UE according to claim 1, wherein the prohibition time period is such that it ends before radio resources according to the one or more periodic-resources configurations are to be used for exchanging data of a subsequent video frame of the video application, the subsequent video frame being directly subsequent to that video frame that triggered the prohibition,
optionally wherein the prohibition time period ends:
• at the end of a configured prohibition time period that starts with reference to the periodic resource used for exchanging the data of the video frame,
• at the beginning of a next jitter window, the next jitter window being directly next to the one jitter window, or
• at the beginning of a first-occurring or later- occurring periodic resource of one of the one or more periodic-resources configurations that overlaps a next jitter window.

3. The UE according to claim 1 or 2, wherein the one or more periodic-resource configurations are one or more configured uplink resource grants, and wherein the processing circuitry, when in operation and upon generation of the video frame of the video application, determines a periodic uplink resource for transmitting data of the generated video frame to the base station according to one configured uplink resource grant,
the transceiver, which in operation, transmits the data of the generated video frame of the video application to the base station using the determined periodic uplink resource according to the one configured uplink resource grant,
wherein when the processing circuitry determines that the data of the generated video frame of the video application was transmitted to the base station using the periodic uplink resource according to the one configured uplink resource grant, the processing circuitry determines to prohibit use of further periodic uplink resources according to the one or more configured uplink resource grants for the prohibition time period.

4. The UE according to claim 3, wherein the processing circuitry, when in operation, determines the prohibition time period based on:
- a prohibition time value, associated with the one configured uplink resource grant whose periodic uplink resource was used to transmit the data of the generated video frame to the base station,
optionally wherein the determining of the prohibition time period based on the prohibition value is further based on a CG-prohibition-value association associating each of the one or more configured uplink resource grants with a respective prohibition time value, optionally wherein the CG-prohibition-value association is received from the base station, optionally in a message of the Radio Resource Control, RRC, protocol.

5. The UE according to claim 3, wherein the processing circuitry, when in operation, determines the prohibition time period based on:
• the timing of the next jitter window,
optionally wherein the processing circuity, when in operation, determines the timing of the next jitter window, based on :
• information on the timing of the jitter windows of the video application, optionally provided by a UE layer handling the video application for a UE layer handling the prohibition, using inter-layer communication, or
• one or more of the video frame periodicity and a time at which video frames are generated for the video application,
optionally wherein the transceiver, when in operation, transmits information on the timing of the jitter window of the video application to the base station.

6. The UE according to any one of claim 1 to 5, wherein the one or more periodic-resource configurations are one or more semi-persistent scheduling, SPS, downlink resource configurations, wherein the processing circuitry, when in operation, monitors periodic downlink resources for receiving one or more video frames of the video application from the base station according to the one or more SPS downlink resource configurations with which the UE is configured,
the transceiver, which in operation, receives data of the video frame of the video application from the base station using a periodic downlink resource according to one of the one or more SPS downlink resource configurations,
wherein when the processing circuitry determines that the data of the video frame of the video application was received from the base station in the periodic downlink resource according to the one SPS downlink resource configuration, the processing circuitry determines to prohibit use of further periodic downlink resources according to the one or more SPS downlink resource configurations for the prohibition time period, and
optionally wherein the prohibiting of the use of the further periodic downlink resources includes that the UE does not need to monitor the further periodic downlink resources for possible downlink data of video frames from the base station,
optionally wherein the prohibiting of the use of the further periodic downlink resources includes that the UE does not need to transmit, to the base station, uplink control information regarding reception feedback for potential downlink data received according to the further periodic downlink resources.

7. The UE according to claim 6, wherein the processing circuitry, when in operation, determines the prohibition time period based on:
- a prohibition time value, associated with the one SPS downlink resource configuration that provides the periodic downlink resource via which the data of the video frame was received from the base station,
optionally wherein the determining of the prohibition time period based on the prohibition value is further based on an SPS-prohibition-value association associating each of the SPS downlink resource configurations with a respective prohibition time value, optionally wherein the SPS-prohibition-value association is received from the base station, optionally in a message of the Radio Resource Control, RRC, protocol.

8. The UE according to claim 6, wherein the processing circuitry, when in operation, determines the prohibition time period based on:
- the timing of the next jitter window,
optionally wherein the processing circuity, when in operation, determines the timing of the next jitter window based on :
• information on the timing of the jitter windows of the video application, received from the base station, or
• one or more of the video frame periodicity and a time at which video frames for the video application are received from the base station.

9. The UE according to any one of claims 1 to 8, wherein the one or more periodic-resource configurations are one or more, scheduling request, SR, uplink resource configurations, wherein the UE is configured with periodic scheduling request, SR, resources for transmitting a scheduling request to the base station according to the one or more SR uplink resource configurations, the scheduling request requesting the base station to grant uplink resources to the UE,
the processing circuitry, when in operation and upon generation of the video frame of the video application, determines a periodic SR uplink resource according to one of the one or more SR uplink resource configurations for transmitting a scheduling request to the base station to request uplink resources for transmitting the data of the generated video frame,
the transceiver, which in operation, transmits a scheduling request to the base station using the periodic SR resource according to the one SR uplink resource configurations,
the transceiver, which in operation, transmits the data of the generated video frame of the video application to the base station using uplink resources dynamically granted by the base station in response to the UE having transmitted the scheduling request,
wherein when the processing circuitry determines that the data of the generated video frame of the video application was transmitted to the base station using the uplink resources dynamically granted by the base station in response to the UE having transmitted the scheduling request to the base station using the periodic SR resource of the one SR uplink resource configuration, the processing circuitry determines to prohibit use of further periodic SR resources according to the one or more SR uplink resource configurations for the prohibition time period.

10. The UE according to claim 9, wherein the processing circuitry, when in operation, determines the prohibition time period based on:
- a prohibition time value, associated with the one SR uplink resource configuration whose periodic SR uplink resource was used to transmit the scheduling request to the base station,
optionally wherein the determining of the prohibition time period based on the prohibition value is further based on an SR-prohibition-value association associating each of the SR uplink resource configurations with a respective prohibition time value, optionally wherein the SR-prohibition-value association is received from the base station, optionally in a message of the Radio Resource Control, RRC, protocol.

11. The UE according to claim 9, wherein the processing circuitry, when in operation, determines the prohibition time period based on:
- the timing of the next jitter window,
optionally wherein the processing circuity, when in operation, determines the timing of the next jitter window, based on:
• information on the timing of the jitter windows of the video application provided by a UE layer handling the video application for a UE layer handling the prohibition, using inter-layer communication, or
• one or more of the video frame periodicity and a time at which video frames are generated for the video application,
optionally wherein the transceiver, when in operation, transmits information on the timing of the jitter window of the video application to the base station.

12. The UE according to any one of claims 1 to 11, wherein the processing circuitry, when in operation, determines whether or not all the data of the video frame of the video application was exchanged using the periodic resource according to the one periodic-resources configurations,
in case not all data of the video frame of the video application was exchanged, the remaining data of the video frame is exchanged using one or more resources dynamically granted by the base station, wherein when the processing circuitry determines that the remaining data for the video frame was exchanged by use of the dynamically granted one or more resources, the processing circuitry determines to prohibit the use of further periodic resources according to the one or more periodic-resources configurations for a period of time.

13. The UE according to claim 12, wherein the processing circuitry, when in operation, determines the prohibition time period based on a prohibition time value, associated with a retransmission protocol process to be used for the exchange of the remaining data of the video frame, wherein the dynamic grant by the base station indicates the retransmission protocol process,
optionally wherein the determining of the prohibition time period based on the prohibition value is further based on a retransmission-protocol-prohibition-value association associating each of one or more retransmission protocol processes with a respective prohibition time value, optionally wherein the retransmission-protocol-prohibition-value association is received from the base station, optionally in a message of the Radio Resource Control, RRC, protocol, and
optionally wherein in case two or more resources are dynamically granted by the base station for exchange of the remaining data of the video frame, the determining of the prohibition time period is based on the prohibition value associated with that retransmission protocol process to be used for the last-occurring exchange of the remaining data of the video frame,
optionally wherein the retransmission protocol process is a Hybrid-automatic repeat request, HARQ, process,
optionally wherein the start of the prohibition time period is the reception of a dynamic resource control information or the transmission of the remaining data using the dynamically granted one or more resources.

14. A base station comprising:
processing circuitry, which in operation, operates a video application, according to which video frames are generated with a video frame periodicity, wherein each video frame is generated within a jitter window having a jitter window length,
a transceiver, which in operation, uses radio resources for exchanging one or more video frames of the video application between a UE and the base station, the radio resources being determined by the base station based on one or more periodic-resources configurations,
wherein when the processing circuitry determines that data for a video frame of the video application, generated during one jitter window, was exchanged by use a periodic resource of one of the one or more periodic-resources configurations, the processing circuitry determines to prohibit the use of further periodic radio resources according to the one or more periodic-resources configurations for a period of time.

15. The base station according to claim 14, wherein the one or more periodic-resource configurations are one or more configured uplink resource grants, and wherein the processing circuitry, when in operation monitors periodic uplink resources for receiving one or more video frames of the video application from the UE according to the one or more configured uplink resource grants,
the transceiver, which in operation, receives the data of the video frame of the video application from the UE using one periodic uplink resource according to one of the configured uplink resource grants,
wherein when the processing circuitry determines that the data of the video frame of the video application was received from the UE in the periodic uplink resource according to the one configured uplink resource grant, the processing circuitry determines to prohibit use of further periodic uplink resources according to the one or more configured uplink resource grants for the prohibition time period,
optionally wherein the prohibiting of the use of the further periodic uplink resources includes that the base station does not need to monitor the further periodic uplink resources for possible uplink data of video frames from the UE,
optionally wherein the prohibiting of the use of the further periodic uplink resources includes that the base station does not need to transmit, to the UE, downlink control information regarding reception feedback for potential uplink data received according to the further periodic uplink resources.
